# EUROPEAN PATENT APPLICATION

(11) **EP 4 827 140 A1**
(43) Date of publication of application: **21.10.2026**
(21) Application number: 25744533.8
(22) Date of filing: 20.01.2025
(51) Int. Cl.: H04W 12/03

(54) **INFORMATION PROCESSING METHOD AND APPARATUS, AND SYSTEM**

(30) Priority: 25.01.2024 CN 202410111467
(71) Applicant: Huawei Technologies Co., Ltd., Shenzhen, Guangdong 518129 (CN)
(72) Inventor: WANG, Wenhui, Shenzhen, Guangdong 518129 (CN); LIU, Fei, Shenzhen, Guangdong 518129 (CN); JIN, Weisheng, Shenzhen, Guangdong 518129 (CN)
(74) Representative: Pfenning, Meinig & Partner mbB
(86) International application number: PCT/CN2025/073275
(87) International publication number: WO 2025/157092

(57) **Abstract**

Embodiments of this application provide an information processing method, apparatus, and system, applied to a first network element. The method includes: encrypting first information, to obtain a first ciphertext of the first information, where the first information includes a first keyword; and sending second information to a second network element, where the second information includes the first ciphertext of the first information, a type of the first keyword, and a public key identifier. This method can enhance privacy protection.

## Description

This application claims priority to Chinese Patent Application No. 202410111467.7, filed with the China National Intellectual Property Administration on January 25, 2024, and entitled "INFORMATION PROCESSING METHOD, APPARATUS, AND SYSTEM", which is incorporated herein by reference in its entirety.

### TECHNICAL FIELD

This application relates to the field of communication technologies, and in particular, to an information processing method, apparatus, and system.

### BACKGROUND

Data is one of production factors of the digital society. With the integration of communication with sensing, computing, and other functions beyond mere connectivity, a large amount of data is to be generated. These functions beyond mere connectivity can not only serve networks or devices, but also expose services to external networks. Therefore, they may suffer various security and privacy attacks from both internal and external entities of the network.

How to fully explore and realize data value while meeting high security and privacy requirements and how to enhance privacy protection while implementing new network capabilities and services are urgent problems to be resolved.

### SUMMARY

This application discloses an information processing method, apparatus, and system, to implement privacy protection.

According to a first aspect, an embodiment of this application provides an information processing method, applied to a first network element. The method includes: The first network element encrypts first information, to obtain a first ciphertext of the first information, where the first information includes a first keyword. The first network element further sends second information to a second network element, where the second information includes the first ciphertext of the first information, a type of the first keyword, and a public key identifier.

In this embodiment of this application, the second information sent by the first network element to the second network element includes the first ciphertext of the first information, and the second network element cannot learn of a plaintext of the first information, so that privacy protection can be implemented. In addition, the second information further includes the type of the first keyword and the public key identifier, so that the second network element can perform ciphertext retrieval based on the type of the first keyword and the public key identifier, and further perform ciphertext computation. In other words, information or data can be exchanged and used while privacy protection is implemented.

In a possible implementation, the type of the first keyword may be an identifier type. The identifier type may be, for example, a subscription permanent identifier (Subscription Permanent Identifier, SUPI) type. Based on the type of the first keyword in the second information, the second network element can find, when performing ciphertext retrieval, a ciphertext corresponding to the type of the first keyword.

In a possible implementation, the public key identifier includes at least one of a network identifier, a network element identifier, a subscriber identifier, a base station identifier (or location area identifier or the like), and a sequence number. The network identifier may be, for example, a public land mobile network (Public Land Mobile Network, PLMN) identifier (Identifier, ID), a core network (core network, CN) ID, or a network identifier (Network Identifier, NID). The network element identifier may be, for example, an access and mobility management function (Access and Mobility management Function, AMF) ID or a radio network controller (Radio Network Controller, RNC) ID. The subscriber identifier may be, for example, a permanent identifier or a temporary identifier, such as a SUPI or a self-control identity (self-control identity, scID). The location area or base station identifier may be, for example, a location area identity (Location Area Identity, LAI), a routing area identity (Routing Area Identity, RAI), a cell global identity (Cell Global Identity, CGI), or a base station identity code (Base Station Identity Code, BSIC). The sequence number may be, for example, an incremental sequence used to identify key update.

The public key identifier in the second information may be used to determine index information of a computation key required for ciphertext retrieval. For example, a PLMN-level computation key or a user-level computation key may be selected.

In a possible implementation, the second information further includes at least one of the following: a data category, home network identifier information, routing indicator information, and protection scheme identifier information.

The data category may be used to determine a preset database. The home network identifier information may be used to search a ciphertext area for a computation key. The routing indicator information may be used to route network signaling that carries the first ciphertext to a network element that can serve a user. The protection scheme identifier information may indicate an encryption algorithm type.

In a possible implementation, at least one of the first network element and the second network element is a network element in a radio network.

In a possible implementation, the first keyword may be globally unique identifier information in the first information. For example, the first keyword is at least one of a subscriber identifier and a device identifier.

In a possible implementation, the first information includes at least one of the following: user identity information, user subscription information, sensing information, and authentication and/or key information.

The user identity information may be, for example, at least one of the following: (1) Subscriber identifier: The subscriber identifier may be a permanent identifier, for example, a subscription permanent identifier SUPI (an international mobile subscription identity (International Mobile Subscription Identity, IMSI), a network specific identifier (Network Specific Identifier, NSI), a global line identifier (Global Line Identifier, GLI), a global cable identifier (Global Cable Identifier, GCI), or the like), a generic public subscription identifier (Generic Public Subscription Identifier, GPSI) (a mobile subscriber international ISDN number MSISDN, an external identifier, or the like), or a self-control identity scID. Alternatively, the subscriber identifier may be a temporary identifier, for example, a globally unique temporary UE identity (Globally Unique Temporary UE Identity, GUTI), a temporary mobile subscriber identity (Temporary Mobile Subscriber Identity, TMSI), a SUPI hash value, or a random ID. (2) Device identifier: The device identifier may be a permanent identifier, for example, a permanent equipment identifier (Permanent Equipment Identifier, PEI) (an international mobile station equipment identity (International Mobile station Equipment Identity, IMEI), an international mobile station equipment identity and software version number (International Mobile station Equipment Identity and Software Version number, IMEISV), an IEEE extended unique identifier (Extended Unique Identifier, EUI-64), or the like), or a medium access control (medium access control, MAC) address. Alternatively, the device identifier may be a temporary identifier, for example, an IP address (Ipv4 or IPv6) allocated to a device. (3) User physiological characteristic: The user physiological characteristic may be, for example, a heartbeat, respiration, a voice characteristic, facial features, a fingerprint, or an iris. (4) User digital asset and others: The user digital asset may be a digital avatar, for example, a virtual human. Alternatively, the user digital asset may be a digital item in a virtual world.

The user subscription information may be general service data, for example, a user type, an access type, an access area, quality of service (quality of service, QoS), and a roaming restriction. The user subscription information may alternatively be a service profile Service Profile, for example, subscription mobility management (mobility management, MM)/session management (session management, SM), a slice service parameter, or a user-specific configuration and parameter (charging or the like).

The sensing information may be, for example, location information, such as an access network E-UTRAN cell global identifier (E-UTRAN Cell Global Identifier, ECGI), a tracking area identity (Tracking Area Identity, TAI), or accurate information such as longitude and latitude. Alternatively, the sensing information may be historical information, for example, a signaling history or a data access history. Certainly, the sensing information may be other sensing data (for example, characteristic information of an environment and/or an object in the environment, a distance (range) from the object, and an angle or an instantaneous linear velocity of the object).

The authentication information may be, for example, an operator variant algorithm configuration field (Operator Variant Algorithm Configuration Field, OP), an authentication key (Key identifier, KI), a cryptographic key K4, or an operator code (operator code, Opc). The key information may be, for example, a user plane UP key.

In a possible implementation, the first network element further encrypts the first information based on an encryption key, to obtain the first ciphertext of the first information.

In a possible implementation, the encryption key is determined based on at least one of a home network key, a serving network name, a sequence number, an encryption algorithm identifier, and a common reference quantity. For example, the encryption key is a PLMN-level key.

In another possible implementation, the encryption key is determined based on at least one of a user key, a serving network name, a sequence number, a subscriber identifier, an algorithm identifier, and a common reference quantity. For example, the encryption key is a UE-level key.

In a possible implementation, the first network element performs initial encryption on the first information based on the encryption key, to obtain an initial ciphertext of the first information. The first network element further performs blinding processing on the initial ciphertext of the first information, to obtain the first ciphertext of the first information.

The blinding processing may be understood as re-noising the initial ciphertext. When re-encryption is not required, the blinding processing can enable same plaintext information to correspond to different ciphertexts, so that the second network element can be prevented from obtaining association information by directly comparing the received different ciphertexts.

In a possible implementation, the first network element receives third information from a third network element, where the third information includes at least one of the encryption key, an encryption parameter, and a decryption key.

In a possible implementation, the first network element is a network element in a home network HPLMN, and the second network element is a network element in a visited network

VPLMN.

Alternatively, the first network element is a network element at a high trust level that stores at least one of important data such as subscription data, an authentication parameter, a permanent identity, and a user root key in a home network, for example, at least one of network elements such as an AUSF, a UDM, an ARPF, and an SIDF in a 5G network; and the second network element is a network element at a low trust level that provides at least one of functions such as a user plane function, session management, storage, and access management, for example, at least one of network elements such as a UPF, an SMF, a PCF, an NRF, an NSSF, and an AMF in the 5G network.

Alternatively, the first network element is a management plane network element of a network element having a subscription data management function, and the second network element is a control plane network element. For example, the network elements are a management plane network element and a control plane network element of a UDM in a 5G network.

Alternatively, at least one of the first network element and the second network element is a virtual network element, and a trust zone of the first information of the first network element does not include the second network element, in other words, the first network element cannot send a plaintext of the first information to the second network element.

Alternatively, at least one of the first network element and the second network element is a radio access network RAN node, and a trust zone of the first information of the first network element does not include the second network element.

Alternatively, the first network element is UE, and the second network element is a RAN node and/or an NF.

Alternatively, the first network element is a third-party server or a network element in an application layer, and the second network element is a network element in a radio network.

Alternatively, the first network element is a network element in a radio network, and the second network element is a third-party server or a network element in an application layer.

Alternatively, the first network element is UE or an application APP server, and the second network element is a RAN node and/or an NF.

The first network element is a trusted domain of the first information, and the second network element is an untrusted domain of the first information. Due to a specific high privacy protection requirement, the second network element in the untrusted domain cannot obtain a plaintext of the first information. According to the information processing method provided in this embodiment of this application, the second network element in the untrusted domain may perform processing based on the ciphertext of the first information, for example, processing such as ciphertext retrieval or ciphertext computation. According to this method, information can be exchanged and used while privacy protection is implemented.

According to a second aspect, an embodiment of this application provides an information processing method, applied to a second network element. The method includes: The second network element receives second information from a first network element, where the second information includes a first ciphertext of first information, a type of a first keyword, and a public key identifier, and the first information includes the first keyword. The second network element further determines, based on a ciphertext of the first keyword, the type of the first keyword, and the public key identifier, information about an association between a second ciphertext and the first ciphertext of the first information.

In this embodiment of this application, the second information received by the second network element includes the first ciphertext of the first information, and the second network element cannot learn of a plaintext of the first information, so that privacy protection can be implemented. In addition, the second information further includes the type of the first keyword and the public key identifier, so that the second network element can perform ciphertext retrieval based on the ciphertext of the first keyword, the type of the first keyword, and the public key identifier, to determine the information about the association between the second ciphertext and the first ciphertext of the first information. Further, ciphertext computation may be performed. According to this method, information or data can be exchanged and used while privacy protection is implemented.

The association information may be understood as that both the second ciphertext and the first ciphertext of the first information are ciphertexts including a same keyword (the first keyword). That is, there is a correlation between the first ciphertext and the second ciphertext. For example, when the keyword is a subscription permanent identifier, both the first ciphertext and the second ciphertext are ciphertexts corresponding to the subscription permanent identifier, in other words, both the first ciphertext and the second ciphertext are related to the subscription permanent identifier.

In a possible implementation, the second network element retrieves the second ciphertext from a preset database based on the ciphertext of the first keyword, the type of the first keyword, and the public key identifier, where the second ciphertext is a ciphertext corresponding to fourth information in the preset database, and the fourth information includes the first keyword. The second network element determines the information about the association between the second ciphertext of the fourth information and the first ciphertext of the first information.

In a possible implementation, the first ciphertext of the first information is the same as (that is, equal to) the second ciphertext of the fourth information. It may be understood that the first information and the fourth information have a same plaintext and a same ciphertext.

In another possible implementation, the first information is the same as the fourth information, but the first ciphertext of the first information is not equal to the second ciphertext of the fourth information. In other words, the first ciphertext of the first information and the second ciphertext of the fourth information are generated based on different encryption keys or different encryption parameters. In other words, the first information and the fourth information have a same plaintext and different ciphertexts.

In still another possible implementation, the first information and the fourth information are not equal, and include only the same first keyword. In this example, the first information and the fourth information have different plaintexts and different ciphertexts.

For example, after determining the information about the association between the second ciphertext and the first ciphertext of the first information, the second network element may perform classified storage and other processing. For example, after it is determined that both the first ciphertext and the second ciphertext are ciphertexts of UE 1, both the first ciphertext and the second ciphertext are stored in information corresponding to the UE 1.

In a possible implementation, the second network element determines a target key from one or more computation keys based on the public key identifier. The second network element further retrieves the second ciphertext from the preset database based on the ciphertext of the first keyword, the type of the first keyword, and the target key.

In a possible implementation, the second network element receives fifth information from a fourth network element, where the fifth information includes at least one of the one or more computation keys and a computation parameter.

In a possible implementation, the public key identifier includes at least one of a network identifier, a network element identifier, a subscriber identifier, a base station identifier, and a sequence number.

In a possible implementation, at least one of the first network element and the second network element is a network element in a radio network.

In a possible implementation, the first keyword is at least one of a subscriber identifier and a device identifier.

In a possible implementation, the second information further includes at least one of the following: a data category, home network identifier information, routing indicator information, and protection scheme identifier information.

In a possible implementation, the first information includes at least one of the following: user identity information, user subscription information, sensing information, and authentication and/or key information.

In a possible implementation, the first network element is a network element in a home network HPLMN, and the second network element is a network element in a visited network VPLMN.

Alternatively, the first network element is a network element at a high trust level that stores at least one of important data such as subscription data, an authentication parameter, a permanent identity, and a user root key in a home network, for example, at least one of network elements such as an AUSF, a UDM, an ARPF, and an SIDF in a 5G network; and the second network element is a network element at a low trust level that provides at least one of functions such as a user plane function, session management, storage, and access management, for example, at least one of network elements such as a UPF, an SMF, a PCF, an NRF, an NSSF, and an AMF in the 5G network.

Alternatively, the first network element is a management plane network element of a network element having a subscription data management function, and the second network element is a control plane network element. For example, the network elements are a management plane network element and a control plane network element of a UDM in a 5G network.

Alternatively, at least one of the first network element and the second network element is a virtual network element, and a trust zone of the first information of the first network element does not include the second network element, in other words, the first network element cannot send a plaintext of the first information to the second network element.

Alternatively, at least one of the first network element and the second network element is a radio access network RAN node, and a trust zone of the first information of the first network element does not include the second network element.

Alternatively, the first network element is UE, and the second network element is a RAN node and/or an NF.

Alternatively, the first network element is a third-party server or a network element in an application layer, and the second network element is a network element in a radio network.

Alternatively, the first network element is a network element in a radio network, and the second network element is a third-party server or a network element in an application layer.

Alternatively, the first network element is UE or an application APP server, and the second network element is a RAN node and/or an NF.

According to a third aspect, an embodiment of this application provides an information processing apparatus. The apparatus may be used in the first network element in the first aspect. The apparatus may be the first network element, or may be an apparatus (for example, a chip, a chip system, or a circuit) in the first network element, or may be an apparatus that can be used in combination with the first network element, or may be a logical module or software that can implement all or some functions of the first network element.

In a possible implementation, the apparatus may include modules or units that are in one-to-one correspondence with the methods/operations/steps/actions described in the first aspect. The modules or units may be hardware circuits or software, or may be implemented by a hardware circuit in combination with software.

In a possible implementation, the apparatus includes: a processing module, configured to encrypt first information, to obtain a first ciphertext of the first information, where the first information includes a first keyword; and a communication module, configured to send second information to a second network element, where the second information includes the first ciphertext of the first information, a type of the first keyword, and a public key identifier.

In a possible implementation, the public key identifier includes at least one of a network identifier, a network element identifier, a subscriber identifier, a base station identifier, and a sequence number.

In a possible implementation, at least one of the first network element and the second network element is a network element in a radio network.

In a possible implementation, the first keyword is at least one of a subscriber identifier and a device identifier.

In a possible implementation, the second information further includes at least one of the following: a data category, home network identifier information, routing indicator information, and protection scheme identifier information.

In a possible implementation, the first information includes at least one of the following: user identity information, user subscription information, sensing information, and authentication and/or key information.

In a possible implementation, the processing module is further configured to:
encrypt the first information based on an encryption key, to obtain the first ciphertext of the first information.

In a possible implementation, the encryption key is determined based on at least one of a home network key, a serving network name, a sequence number, an encryption algorithm identifier, and a common reference quantity.

In another possible implementation, the encryption key is determined based on at least one of a user key, a serving network name, a sequence number, a subscriber identifier, an algorithm identifier, and a common reference quantity.

In a possible implementation, the processing module is further configured to:
perform initial encryption on the first information based on the encryption key, to obtain an initial ciphertext of the first information; and
perform blinding processing on the initial ciphertext of the first information, to obtain the first ciphertext of the first information.

In a possible implementation, the communication module is further configured to:
receive third information from a third network element, where the third information includes at least one of the encryption key, an encryption parameter, and a decryption key.

In a possible implementation, the apparatus is a network element in a home network HPLMN, and the second network element is a network element in a visited network VPLMN.

Alternatively, the apparatus is a network element at a high trust level that stores at least one of important data such as subscription data, an authentication parameter, a permanent identity, and a user root key in a home network, for example, at least one of network elements such as an AUSF, a UDM, an ARPF, and an SIDF in a 5G network; and the second network element is a network element at a low trust level that provides at least one of functions such as a user plane function, session management, storage, and access management, for example, at least one of network elements such as a UPF, an SMF, a PCF, an NRF, an NSSF, and an AMF in the 5G network.

Alternatively, the apparatus is a management plane network element of a network element having a subscription data management function, and the second network element is a control plane network element. For example, the network elements are a management plane network element and a control plane network element of a UDM in a 5G network.

Alternatively, at least one of the apparatus and the second network element is a virtual network element, and a trust zone of the first information of the apparatus does not include the second network element, in other words, the apparatus cannot send a plaintext of the first information to the second network element.

Alternatively, at least one of the apparatus and the second network element is a radio access network RAN node, and a trust zone of the first information of the apparatus does not include the second network element.

Alternatively, the apparatus is UE, and the second network element is a RAN node and/or an NF.

Alternatively, the apparatus is a third-party server or a network element in an application layer, and the second network element is a network element in a radio network.

Alternatively, the apparatus is a network element in a radio network, and the second network element is a third-party server or a network element in an application layer.

Alternatively, the apparatus is UE or an application APP server, and the second network element is a RAN node and/or an NF.

According to a fourth aspect, an embodiment of this application provides an information processing apparatus. The apparatus may be used in the second network element in the second aspect. The apparatus may be the second network element, or may be an apparatus (for example, a chip, a chip system, or a circuit) in the second network element, or may be an apparatus that can be used in combination with the second network element, or may be a logical module or software that can implement all or some functions of the second network element.

In a possible implementation, the apparatus may include modules or units that are in one-to-one correspondence with the methods/operations/steps/actions described in the second aspect. The modules or units may be hardware circuits or software, or may be implemented by a hardware circuit in combination with software.

In a possible implementation, the apparatus includes: a communication module, configured to receive second information from a first network element, where the second information includes a first ciphertext of first information, a type of a first keyword, and a public key identifier, and the first information includes the first keyword; and
a processing module, configured to determine, based on a ciphertext of the first keyword, the type of the first keyword, and the public key identifier, information about an association between a second ciphertext and the first ciphertext of the first information.

In a possible implementation, the processing module is configured to:
retrieve the second ciphertext from a preset database based on the ciphertext of the first keyword, the type of the first keyword, and the public key identifier, where the second ciphertext is a ciphertext corresponding to fourth information in the preset database, and the fourth information includes the first keyword; and
determine the information about the association between the second ciphertext and the first ciphertext of the first information.

In a possible implementation, the processing module is further configured to: determine a target key from one or more computation keys based on the public key identifier; and
retrieve the second ciphertext from the preset database based on the ciphertext of the first keyword, the type of the first keyword, and the target key.

In a possible implementation, the communication module is further configured to receive fifth information from a fourth network element, where the fifth information includes at least one of the one or more computation keys and a computation parameter.

In a possible implementation, the public key identifier includes at least one of a network identifier, a network element identifier, a subscriber identifier, a base station identifier, and a sequence number.

In a possible implementation, at least one of the first network element and the second network element is a network element in a radio network.

In a possible implementation, the first keyword is at least one of a subscriber identifier and a device identifier.

In a possible implementation, the second information further includes at least one of the following: a data category, home network identifier information, routing indicator information, and protection scheme identifier information.

In a possible implementation, the first information includes at least one of the following: user identity information, user subscription information, sensing information, and authentication and/or key information.

In a possible implementation, the first network element is a network element in a home network HPLMN, and the apparatus is a network element in a visited network VPLMN.

Alternatively, the first network element is a network element at a high trust level that stores at least one of important data such as subscription data, an authentication parameter, a permanent identity, and a user root key in a home network, for example, at least one of network elements such as an AUSF, a UDM, an ARPF, and an SIDF in a 5G network; and the apparatus is a network element at a low trust level that provides at least one of functions such as a user plane function, session management, storage, and access management, for example, at least one of network elements such as a UPF, an SMF, a PCF, an NRF, an NSSF, and an AMF in the 5G network.

Alternatively, the first network element is a management plane network element of a network element having a subscription data management function, and the apparatus is a control plane network element. For example, the network elements are a management plane network element and a control plane network element of a UDM in a 5G network.

Alternatively, at least one of the first network element and the apparatus is a virtual network element, and a trust zone of the first information of the first network element does not include the apparatus, in other words, the first network element cannot send a plaintext of the first information to the apparatus.

Alternatively, at least one of the first network element and the apparatus is a radio access network RAN node, and a trust zone of the first information of the first network element does not include the apparatus.

Alternatively, the first network element is UE, and the apparatus is a RAN node and/or an NF.

Alternatively, the first network element is a third-party server or a network element in an application layer, and the apparatus is a network element in a radio network.

Alternatively, the first network element is a network element in a radio network, and the apparatus is a third-party server or a network element in an application layer.

Alternatively, the first network element is UE or an application APP server, and the apparatus is a RAN node and/or an NF.

According to a fifth aspect, an embodiment of this application provides an information processing method, applied to a third network element. The method includes: receiving a first request, where the first request is used to obtain an encryption key, and the first request further includes a privacy computing capability of a first network element; and sending third information, where the third information includes at least one of an encryption key, an encryption parameter, and a decryption key.

For example, the first network element may be a network element in a home network HPLMN, or the first network element is UE or the like.

In a possible implementation, the encryption key is determined based on at least one of a home network key, a serving network name, a sequence number, an encryption algorithm identifier, and a common reference quantity.

In another possible implementation, the encryption key is determined based on at least one of a user key, a serving network name, a sequence number, a subscriber identifier, an algorithm identifier, and a common reference quantity.

In a possible implementation, the method further includes: receiving a second request, where the second request is used to obtain a computation key, and the second request further includes a privacy computing capability of a second network element; and sending sixth information, where the sixth information includes at least one of the computation key and a computation parameter.

For example, the second network element may be a network element in a visited network VPLMN, or the second network element is a RAN node or the like.

In a possible implementation, the method further includes: receiving the first request from the first network element, where the first request is used to obtain the encryption key, and the first request further includes the privacy computing capability of the first network element; and sending the third information to the first network element, where the third information includes at least one of the encryption key, the encryption parameter, and the decryption key.

In a possible implementation, the method further includes: receiving the second request from a fourth network element, where the second request is used to obtain the computation key, and the second request further includes the privacy computing capability of the second network element; and sending the sixth information, where the sixth information includes at least one of the computation key and the computation parameter.

For example, the fourth network element may be a privacy computing management (Privacy computing management, PCM) unit. For example, the fourth network element is a PCM corresponding to a ciphertext area.

According to a sixth aspect, an embodiment of this application provides an information processing method, applied to a fourth network element. The method includes: receiving a third request, where the third request is used to obtain a computation key, and the third request further includes a privacy computing capability of a second network element; sending a second request, where the second request is used to obtain the computation key, and the request further includes the privacy computing capability of the second network element; receiving seventh information, where the seventh information includes at least one of the computation key and a computation parameter; and sending fifth information, where the fifth information includes at least one of the computation key and the computation parameter.

For example, the second network element may be a network element in a visited network VPLMN, or the second network element is a RAN node or the like.

In a possible implementation, the method further includes: receiving the third request from the second network element, where the third request is used to obtain the computation key, and the request further includes the privacy computing capability of the second network element; sending the second request to a third network element, where the second request is used to obtain the computation key, and the second request further includes the privacy computing capability of the second network element; receiving the seventh information from the third network element, where the seventh information includes at least one of the computation key and the computation parameter; and sending the fifth information to the second network element, where the fifth information includes at least one of the computation key and the computation parameter.

For example, the third network element may be a privacy computing management PCM unit. For example, the third network element is a PCM corresponding to a plaintext area.

According to a seventh aspect, an embodiment of this application provides an information processing apparatus. The apparatus may be used in the third network element in the fifth aspect. The apparatus may be the third network element, or may be an apparatus (for example, a chip, a chip system, or a circuit) in the third network element, or may be an apparatus that can be used in combination with the third network element, or may be a logical module or software that can implement all or some functions of the third network element.

In a possible implementation, the apparatus may include modules or units that are in one-to-one correspondence with the methods/operations/steps/actions described in the fifth aspect. The modules or units may be hardware circuits or software, or may be implemented by a hardware circuit in combination with software.

In a possible implementation, the apparatus includes: a communication module, configured to receive a first request, where the first request is used to obtain an encryption key, and the first request further includes a privacy computing capability of a first network element. The communication module is further configured to send third information, where the third information includes at least one of the encryption key, an encryption parameter, and a decryption key.

In a possible implementation, the encryption key is determined based on at least one of a home network key, a serving network name, a sequence number, an encryption algorithm identifier, and a common reference quantity.

In another possible implementation, the encryption key is determined based on at least one of a user key, a serving network name, a sequence number, a subscriber identifier, an algorithm identifier, and a common reference quantity.

In a possible implementation, the communication module is further configured to receive a second request, where the second request is used to obtain a computation key, and the second request further includes a privacy computing capability of a second network element; and the communication module is further configured to send sixth information, where the sixth information includes at least one of the computation key and a computation parameter.

In a possible implementation, the communication module is further configured to receive the first request from the first network element, where the first request is used to obtain the encryption key, and the first request further includes the privacy computing capability of the first network element; and the communication module is further configured to send the third information to the first network element, where the third information includes at least one of the encryption key, the encryption parameter, and the decryption key.

In a possible implementation, the communication module is further configured to receive the second request from a fourth network element, where the second request is used to obtain the computation key, and the second request further includes the privacy computing capability of the second network element; and the communication module is further configured to send the sixth information, where the sixth information includes at least one of the computation key and the computation parameter.

According to an eighth aspect, an embodiment of this application provides an information processing apparatus. The apparatus may be used in the fourth network element in the sixth aspect. The apparatus may be the fourth network element, or may be an apparatus (for example, a chip, a chip system, or a circuit) in the fourth network element, or may be an apparatus that can be used in combination with the fourth network element, or may be a logical module or software that can implement all or some functions of the fourth network element.

In a possible implementation, the apparatus may include modules or units that are in one-to-one correspondence with the methods/operations/steps/actions described in the sixth aspect. The modules or units may be hardware circuits or software, or may be implemented by a hardware circuit in combination with software.

In a possible implementation, the apparatus includes: a communication module, configured to receive a third request, where the third request is used to obtain a computation key, and the third request further includes a privacy computing capability of a second network element. The communication module is further configured to send a second request, where the second request is used to obtain the computation key, and the request further includes the privacy computing capability of the second network element; the communication module is further configured to receive seventh information, where the seventh information includes at least one of the computation key and a computation parameter; and the communication module is further configured to send fifth information, where the fifth information includes at least one of the computation key and the computation parameter.

In a possible implementation, the communication module is further configured to receive the third request from the second network element, where the third request is used to obtain the computation key, and the request further includes the privacy computing capability of the second network element; the communication module is further configured to send the second request to a third network element, where the second request is used to obtain the computation key, and the second request further includes the privacy computing capability of the second network element; the communication module is further configured to receive the seventh information from the third network element, where the seventh information includes at least one of the computation key and the computation parameter; and the communication module is further configured to send the fifth information to the second network element, where the fifth information includes at least one of the computation key and the computation parameter.

According to a ninth aspect, this application provides an information processing apparatus, including a processor, configured to cause, by executing a computer program (or computer-executable instructions) stored in a memory and/or by using a logic circuit, the apparatus to perform the method according to the first aspect and the possible implementations of the first aspect, or perform the method according to any one of the second aspect and the possible implementations of the second aspect, or perform the method according to any one of the fifth aspect and the possible implementations of the fifth aspect, or perform the method according to any one of the sixth aspect and the possible implementations of the sixth aspect.

In a possible implementation, the apparatus further includes the memory.

In a possible implementation, the processor and the memory are integrated together.

In another possible implementation, the memory is located outside the apparatus.

The apparatus further includes a communication interface. The communication interface is used for communication between the apparatus and another device, for example, for data and/or signal sending or receiving. For example, the communication interface may be a transceiver, a circuit, a bus, a module, or another type of communication interface.

According to a tenth aspect, this application provides an information processing system. The system includes the information processing apparatus according to any one of the possible implementations of the third aspect and the information processing apparatus according to any one of the possible implementations of the fourth aspect.

In a possible implementation, the system further includes the information processing apparatus according to any one of the possible implementations of the seventh aspect and the information processing apparatus according to any one of the possible implementations of the eighth aspect.

According to an eleventh aspect, this application provides a computer-readable storage medium. The computer-readable storage medium stores a computer program, and when the computer program is executed by a processor, the method according to any one of the possible implementations of the first aspect is implemented, or the method according to any one of the possible implementations of the second aspect is implemented, or the method according to any one of the possible implementations of the fifth aspect is implemented, or the method according to any one of the possible implementations of the sixth aspect is implemented.

According to a twelfth aspect, this application provides a computer program product including instructions. When the computer program product runs on a computer, the method according to any one of the possible implementations of the first aspect is implemented, or the method according to any one of the possible implementations of the second aspect is implemented, or the method according to any one of the possible implementations of the fifth aspect is implemented, or the method according to any one of the possible implementations of the sixth aspect is implemented.

It may be understood that the apparatus according to the third aspect, the apparatus according to the fourth aspect, the apparatus according to the seventh aspect, the apparatus according to the eighth aspect, the apparatus according to the ninth aspect, the system according to the tenth aspect, the computer-readable storage medium according to the eleventh aspect, or the computer program product according to the twelfth aspect is configured to perform the method according to any one of the possible implementations of the first aspect, the method according to any one of the possible implementations the second aspect, the method according to any one of the possible implementations of the fifth aspect, or the method according to any one of the possible implementations of the sixth aspect. Therefore, for beneficial effects that can be achieved by the apparatus according to the third aspect, the apparatus according to the fourth aspect, the apparatus according to the seventh aspect, the apparatus according to the eighth aspect, the apparatus according to the ninth aspect, the system according to the tenth aspect, the computer-readable storage medium according to the eleventh aspect, or the computer program product according to the twelfth aspect, refer to the beneficial effects in the corresponding methods. Details are not described herein again.

### BRIEF DESCRIPTION OF DRAWINGS

The following describes the accompanying drawings used in embodiments of this application.
FIG. 1 is a diagram of a communication system according to an embodiment of this application;
FIG. 2 is a diagram of a non-roaming architecture that is of a 5th generation mobile communication network and that is based on a service-oriented interface;
FIG. 3 is a schematic flowchart of an information processing method according to an embodiment of this application;
FIG. 4a to FIG. 4c are respectively diagrams of scenarios according to embodiments of this application;
FIG. 4d to FIG. 4f are respectively diagrams of ciphertext formats according to embodiments of this application;
FIG. 5a is a schematic flowchart of key derivation and distribution according to an embodiment of this application;
FIG. 5b is a diagram of key generation according to an embodiment of this application;
FIG. 5c is another schematic flowchart of key derivation and distribution according to an embodiment of this application;
FIG. 5d is another diagram of key generation according to an embodiment of this application;
FIG. 6a and FIG. 6b are a schematic flowchart of an authentication and key agreement method according to an embodiment of this application;
FIG. 7 is a schematic flowchart of another information processing method according to an embodiment of this application;
FIG. 8a and FIG. 8b are a schematic flowchart of still another information processing method according to an embodiment of this application;
FIG. 9 is a diagram of a structure of an information processing apparatus according to an embodiment of this application; and
FIG. 10 is a diagram of a structure of another information processing apparatus according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

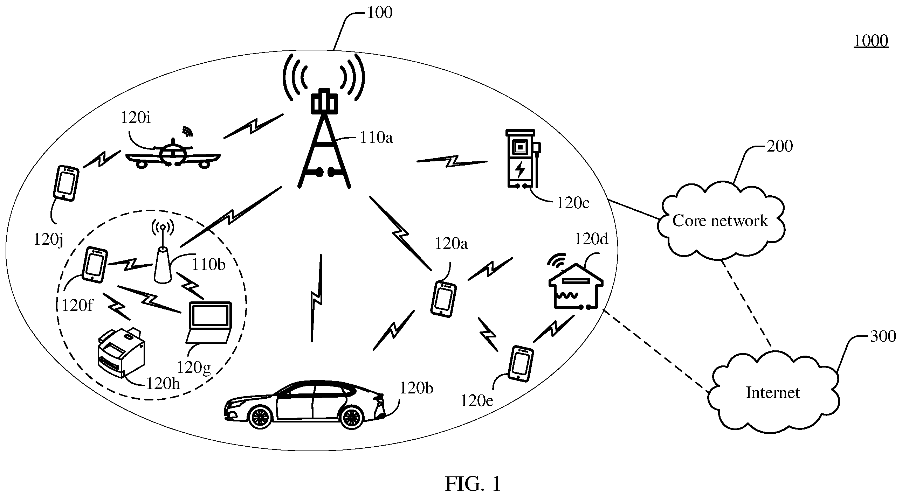

FIG. 1 is a diagram of a possible and non-limiting system. As shown in FIG. 1, the communication system 1000 includes a radio access network (radio access network, RAN) 100 and a core network (core network, CN) 200. Optionally, the communication system 1000 further includes an internet 300. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or an evolved system after 5G (for example, a 6th generation (6th generation, 6G) mobile communication system). The RAN 100 may alternatively be an open radio access network (open RAN, O-RAN or ORAN), a cloud radio access network (cloud radio access network, CRAN), or a wireless local area network (wireless-fidelity, Wi-Fi) system based on the IEEE 802.11 standard. The RAN 100 may alternatively be a communication system that integrates the foregoing two or more systems.

The RAN node 110 may also be referred to as an access network device, a RAN entity, an access node, or the like sometimes, and forms a part of the communication system, to help the terminal implement radio access. A plurality of RAN nodes 110 in the communication system 1000 may be nodes of a same type, or may be nodes of different types. In some scenarios, roles of the RAN node 110 and the terminal 120 are relative to each other. For example, a network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Sometimes, both the RAN node 110 and the terminal 120 are referred to as communication apparatuses. For example, the network elements 110a and 110b each in FIG. 1 may be understood as a communication apparatus having a function of a base station, and the network elements 120a to 120j each may be understood as a communication apparatus having a function of a terminal.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of the software module and the hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), a virtual reality (virtual reality, VR) device, an augmented reality (augmented reality, AR) device, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an aircraft, a ship, a robot, a robotic arm, a smart home device, a light terminal device (light UE), reduced capability user equipment (reduced capability UE, REDCAP UE), a smart point of sale (point of sale, POS) machine, customer-premises equipment (customer-premises equipment, CPE), or the like. The terminal may alternatively be a vehicle apparatus, for example, an entire vehicle apparatus, an in-vehicle module, an in-vehicle chip, an on-board unit (on-board unit, OBU), or a telematics box (telematics box, T-BOX). A device form of the terminal is not limited in embodiments of this application.

Communication between the access network device and the terminal device complies with a specific protocol layer structure. Protocol layers may include a control plane protocol layer and a user plane protocol layer. The control plane protocol layer may include at least one of the following: a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, or the like. The user plane protocol layer may include at least one of the following: a service data adaptation protocol (service data adaptation protocol, SDAP) layer, a PDCP layer, an RLC layer, a MAC layer, a physical layer, or the like.

For a correspondence between the network elements in the ORAN system and protocol layer functions that may be implemented by the network elements, refer to Table 1.

**Table 1**

| ORAN network element | | 3GPP protocol layer function |
|---|---|---|
| O-CU-CP | | RRC+PDCP-C |
| O-CU-UP | | SDAP+PDCP-U |
| | O-DU | RLC+MAC+PHY-high |
| | O-RU | PHY-low |

The base station and the terminal may be at fixed locations, or may be movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for the terminal 120j that accesses the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

In embodiments of this application, the base station is also referred to as an access network device. An apparatus configured to implement a function of the access network device may be an access network device, or may be an apparatus that can support the access network device in implementing the function, for example, a chip system, a hardware circuit, a software module, or a combination of the hardware circuit and the software module. The apparatus may be mounted in the access network device or used in combination with the access network device. In embodiments of this application, an example in which the apparatus configured to implement the function of the access network device is an access network device is merely used for description, and constitutes no limitation on the solutions in embodiments of this application.

It may be understood that this application may be applied between the access network device and the terminal.

It should be understood that quantities and types of devices in the communication system shown in FIG. 1 are merely used as an example, and this application is not limited thereto. In actual application, the communication system may further include more terminals and more access network devices, and may further include other network elements, for example, may include a core network device and/or a network element configured to implement an artificial intelligence function.

It may be understood that all or some functions implemented by one or more of the terminal, the access network device, the core network device, or the network element configured to implement the artificial intelligence function may be virtualized, that is, implemented through one or both of a dedicated processor or a general-purpose processor and a corresponding software module. Because the terminal and the access network device are related to an air interface transmission interface, a transceiver function of the interface may be implemented by hardware. Core network devices such as an operation, administration, and maintenance (operation, administration, and maintenance, OAM) network element can all be virtualized. Optionally, one or more functions in the virtualized terminal, access network device, core network device, or network element configured to implement the artificial intelligence function may be implemented by a cloud device, for example, implemented by a cloud device in an over-the-top (over-the-top, OTT) system.

The following explains several terms in embodiments of this application.

### (1) Privacy computing

For example, privacy computing technologies, centered on homomorphic encryption, secure multi-party computing, and federated learning, comply with the principle that "data is available but not visible, data does not move the model moves". Cryptography and trusted hardware are used to implement interactive computation where sensitive data remains local. This ensures that participants cannot directly obtain or infer original data based on intermediate information, thereby protecting data privacy security during data value realization.

Privacy computing is a type of information technology that implements data analysis and computation by preventing data from being disclosed. It represents the cross-integration of multiple technical systems such as data science, cryptography, and artificial intelligence. The underlying technologies of privacy computing cover a plurality of technologies such as cryptography, distributed machine learning, and trusted hardware. Currently, common technologies mainly include homomorphic encryption (Homomorphic Encryption, HE), secure multi-party computation (Secure Multi-Party Computation, MPC), federated learning (Federated Learning, FL), trusted hardware, and the like. Secure multi-party computation and federated learning mainly use rich cryptographic primitives to construct computing or modeling protocols, so as to protect data privacy between participants. The trusted hardware mainly uses a hardware processor security domain to resolve a trusted computing problem of multi-source data. A privacy computing appliance provides a series of solutions, such as data privacy and security protection and hardware acceleration, through a combination of software and hardware.

### (2) Homomorphic encryption HE

The homomorphic encryption is intended to complete computation processing on a ciphertext of data without exposing a plaintext of the data, and focuses on privacy-preserving computation. Data value mining can be implemented on the premise of providing privacy protection.

The homomorphic encryption HE is an encryption scheme in which an operation can be directly performed on a ciphertext. After homomorphic encryption is performed on plaintext data, ciphertext data is obtained. Then, computation processing is performed on the ciphertext data to obtain an output, and homomorphic decryption is performed on the output, where a result is the same as an output result obtained by performing computation processing on unencrypted plaintext data by using a same method.

### (3) Encryption key

Key encryption is an encryption method in which a data sender and a data receiver use a same key, symmetric keys, or the like to encrypt or decrypt a plaintext.

### (4) Subscription permanent identifier (Subscription Permanent Identifier, SUPI)

The SUPI is globally unique and may be understood as a subscriber identity module (Subscriber Identity Module, SIM) card identifier. The SUPI is allocated to each user, is globally unique, and is provisioned in a unified data management (Unified Data Management, UDM)/unified data repository (Unified Data Repository, UDR) function. The SUPI is used in the 3GPP system.

SUPI types may include the following: an international mobile subscription identity (International Mobile Subscription Identity, IMSI), a network specific identifier (Network Specific Identifier, NSI), a global cable identifier (Global Cable Identifier, GCI), or a global line identifier (Global Line Identifier, GLI). For example, the IMSI is used for 3GPP access, and a form of a network access identifier (Network Access Identifier, NAI) is used for non-3GPP access.

Examples are as follows: 0 indicates the IMSI, which is a number allocated to uniquely identify a mobile subscriber internationally. 1 indicates the NSI, taking the form of a NAI. 2 indicates the GLI, taking the form of a NAI. 3 indicates the GCI, taking the form of a NAI.

### (5) Permanent equipment identifier (Permanent Equipment Identifier, PEI)

PEI types include the following:
0: International mobile station equipment identity (International Mobile station Equipment Identity, IMEI): The IMEI is a flag for distinguishing between mobile devices, is stored in a mobile device, and includes: 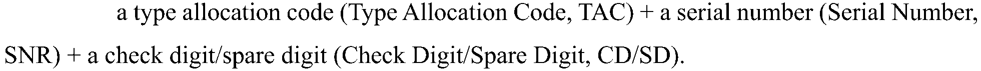 a type allocation code (Type Allocation Code, TAC) + a serial number (Serial Number, SNR) + a check digit/spare digit (Check Digit/Spare Digit, CD/SD).
1: International mobile station equipment identity and software version number (International Mobile station Equipment Identity and Software Version number, IMEISV): The IMEISV is an extended version of the international mobile station equipment identity IMEI.
2: Medium access control address (Medium Access Control Address, MAC)
3: IEEE extended unique identifier (IEEE Extended Unique Identifier, EUI-64), used for UE that does not support any 3GPP access technology

### (6) Generic public subscription identifier (Generic Public Subscription Identifier, GPSI)

The GPSI is required for addressing 3GPP subscription in different data networks outside a 3GPP system, and the 3GPP system stores an association between the GPSI and an SUPI in subscription data.

GPSI types include the following:
0: Mobile subscriber international ISDN number (Mobile Subscriber ISDN number, MSISDN)
1: External identifier

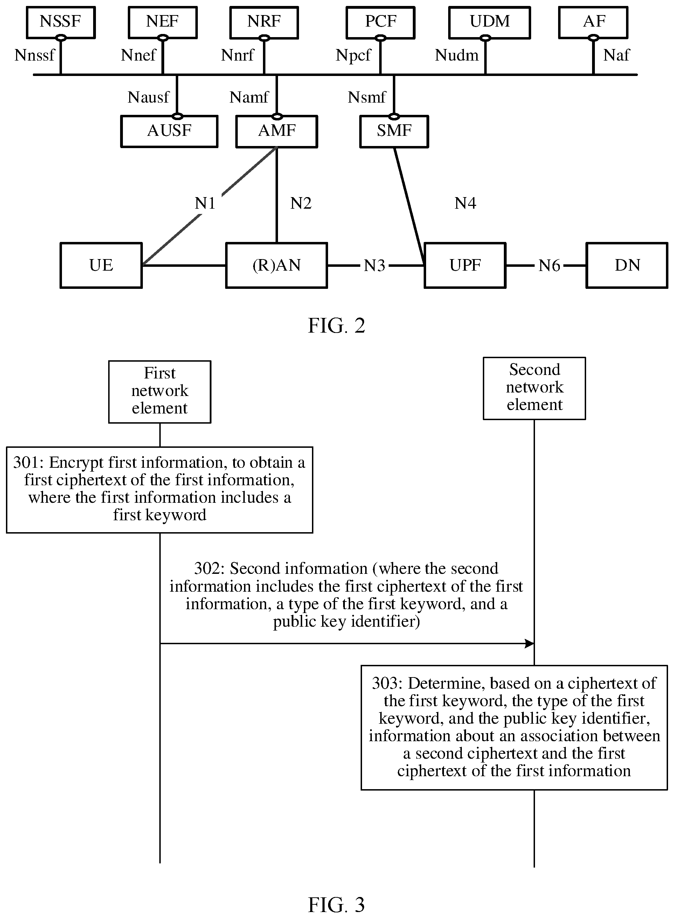

The following specifically describes, by using a non-roaming architecture that is of a 5th generation mobile communication network and that is based on a service-oriented interface shown in FIG. 2 as an example, a communication system to which this application is applicable. The communication system mainly includes an access and mobility management function (Access and Mobility management Function, AMF), a session management function (Session Management Function, SMF), a user plane function (user plane function, UPF), a network exposure function (network exposure function, NEF), and an application function (application function, AF). The communication system may further include a policy control function (policy control function, PCF) entity, a unified data repository UDR function entity (not shown in the figure), and a unified data management UDM function entity.

Functions of the function entities in FIG. 2 are as follows:
The AMF is mainly responsible for signaling processing, for example, functions such as access control, mobility management, attachment and detachment, and gateway selection. When providing a service for a session in a terminal, the AMF provides a storage resource of a control plane for the session, to store a session identifier, an SMF entity identifier associated with the session identifier, and the like.

The SMF is mainly responsible for session management, and is specifically responsible for selecting a user plane function entity, redirecting the user plane function entity, allocating an internet protocol (internet protocol, IP) address, establishing, modifying, and releasing a bearer, and controlling quality of service (quality of service, QoS).

The UPF is responsible for forwarding and receiving user data in the terminal. The UPF may receive user data from a data network, and transmit the user data to the terminal through an access network device. Further, the UPF may receive user data from the terminal through the access network device, and forward the user data to the data network. In the UPF entity, a transmission resource and a scheduling function for providing services for the terminal are managed and controlled by the SMF entity.

The NEF mainly supports secure interaction between a 3GPP network and a third-party application. The NEF can securely expose a network capability and an event to the third-party application, to enhance or improve quality of service of the application. The 3GPP network can also securely obtain related data from the third-party application, to enhance intelligent decision-making of the network. In addition, the function entity supports restoring structured data from the UDR or storing structured data into the UDR.

The AF mainly supports interaction with the 3GPP network to provide a service, for example, influencing a data routing decision and a policy control function, or providing some business services for a network side (where these services may or may not be provided by a third party (third party)).

The PCF mainly supports providing a unified policy framework to govern network behavior, provides a policy rule for a control layer network function, and is also responsible for obtaining user subscription information relevant for policy decisions.

The UDR is mainly responsible for storing structured data, and stored content includes subscription data and policy data, externally exposed structured data, and application-related data.

The UDM is mainly configured to manage user subscription information.

It should be noted that the foregoing function entities are merely names, and the names do not constitute a limitation on the entities. For example, the session management function entity may also be replaced with a "session management function" or another name. In addition, the session management function entity may also correspond to an entity that includes a function other than the session management function. The user plane function entity may also be replaced with a "user plane function" or another name. In addition, the user plane function entity may also correspond to an entity that includes a function other than the user plane function. Unified descriptions are provided herein, and details are not described below.

The user equipment accesses the network through a RAN node or an access network (access network, AN) node. The RAN node is mainly a wireless network device in the 3GPP network, and the AN may be an access network device defined in the non-3GPP.

Related functions of a first network element, a third network element, and the like in embodiments of this application may be implemented by one device, or may be jointly implemented by a plurality of devices, or may be implemented by one or more functional modules in one device. This is not specifically limited in embodiments of this application. Related functions of a second network element, a fourth network element, and the like in embodiments of this application may be implemented by one device, or may be jointly implemented by a plurality of devices, or may be implemented by one or more functional modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

The following describes functions of 5G network elements.
(1) For example, functions of security network elements (with root keys) are first described.
   1. UDM: The UDM includes all capabilities of a home subscriber server (home subscriber server, HSS). The UDM includes the following functions:
      a. Subscription data management
      b. User service NF registration management: In 4G, the HSS stores a host name of a mobility management entity (mobility management entity, MME). To be specific, when a user registers with a network, the MME performs a tracking area update (tracking area update, TAU) procedure, and the HSS stores information about the MME. The same applies to 5G. The UDM stores AMF and SMF information and notifies the UDM of a specific AMF or SMF that currently serves UE.
      c. Generation of 3GPP authentication and key agreement (Authentication and Key Agreement, AKA) authentication parameters: Authentication parameters of quadruplets or quintuplets are generated based on different authentication types.
      d. Subscription data-based access authorization (for example, roaming restriction): Roaming or network access is prohibited in a specific area.
      e. Assurance of service/session continuity: This is generally ensured by a UPF. However, the scenario described herein refers to how to select a converged gateway (gateway, GW) (where the UPF and the GW-U are converged) when assuming movement from a 5G coverage area to a 4G coverage area during 4G/5G interworking. Generally, the AMF and the MME transfer user context information to each other through an N26 interface when the UE moves, and a converged GW is selected based on information about a converged network element carried in the context information. However, if the N26 interface does not exist, information about the converged GW reported by the AMF or the MME for storage can be obtained from the converged UDM+HSS by addressing the converged UDM+HSS, and then the corresponding converged GW is addressed, to ensure service continuity.
   2. Authentication server function (Authentication Server Function, AUSF):
      The AUSF and the UDM are in a same product. The AUSF, serving as an independent NF function, is deployed in a home network in a roaming scenario (in a 5G phase 1 phase).
      The AUSF, serving as an extensible authentication protocol (Extensible Authentication Protocol, EAP) authentication server (where the authentication server is in home domain), performs EAP authentication. The AUSF completes home domain confirmation for 5G AKA authentication. The AUSF computes an authentication vector (RAND/AUTH/HXRES*) based on a 5G HE AV and sends the authentication vector to an SEAF. The AUSF derives an anchor key and sends the anchor key to the SEAF.
      The AUSF supports unified authentication service functions, including 3GPP access authentication and non-3GPP access authentication. During non-3GPP access authentication, the AUSF first accesses a non-3GPP interworking function (non-3GPP interworking function, N3IWF), then the N3IWF accesses the AMF, and the AMF sends a message to the AUSF for authentication.
   3. Security anchor function (Security Anchor function, SEAF):
      The SEAF is deployed together with the AMF. The SEAF is deployed in a visited network in a roaming scenario. The SEAF derives lower-layer non-access stratum (non-access stratum, NAS) and access stratum (access stratum, AS) keys based on the anchor key. The SEAF completes comparing authentication results for 5G AKA.
   4. Access and mobility management AMF function:
      The AMF is a network element that can directly interact with a terminal, and other network elements need to interact with the terminal through the AMF.
      a. Registration management function: Connection management, reachability management, mobility management, access authentication, and access authorization: The AMF retains the access authentication and access authorization functions of the MME, and the AMF performs authentication and authorization on a visited area.
      b. Forwarding of SM messages between the UE and the SMF: Messages exchanged between the terminal and other network elements are encapsulated in a message sent to the AMF. The AMF decapsulates the message and then forwards the message.
      c. Forwarding of SMS messages between the UE and a short message service function (short message service function, SMSF).
(2) The following describes functions of a data network element.
   Unified data repository UDR:
   The UDR may be deployed in each PLMN, and the PLMN is related to an NF to which stored data belongs. The UDR may store application data for a roaming subscriber. An NF that accesses the UDR through Nudr can add, delete, modify, and update data based on its permission.
(3) The following describes functions of other types of network elements.
   1. A session management function SMF is a network element that interacts with a user plane of a core network. Interaction between another network element and the user plane needs to be transferred through the SMF. The SMF includes the following functions:
      a. Session management
      b. UE IP address allocation and management
      c. Selection and control of UPFs, and configuration of traffic steering at UPFs to route traffic to proper destination networks
   2. A user plane function (User Plane Function, UPF) is a user plane network element on a core network side. The UPF includes the following functions:
      a. Data plane anchor: If UE moves when performing a service, the UPF remains unchanged to ensure service continuity.
      b. Packet data unit (packet data unit, PDU) session point of interconnect to a data network
   3. A policy control function PCF includes the following functions:
      a. Support of a unified policy framework to govern network behavior
      b. Providing of a slice-based policy: Mobility, session, and user related policies are provided based on specific slices.
      c. Providing of a session related policy for the SMF (available in 4G): According to the session policy, the SMF limits rates of data packets, performs gate control (does not allow access to specific networks or triggers some policies when an amount of used data reaches a specific upper limit), where the session policy is a busy-hour policy, an off-peak-hour policy, or the like.
      d. Providing of a user related policy for the UE: There is a UE route selection policy (UE Route Selection Policy, URSP). When the UE establishes a session, there are many conditions for session establishment, for example, a slice, a data network name (data network name, DNN), or other conditions. These conditions are for determining whether a data packet on the UE is routed to an established PDU session, a new PDU session, or a session for third-party data. An access network discovery and selection policy (access network discovery & selection policy, ANDSP) is used for non-3GPP network access.
   4. A network capability exposure function NEF includes the following functions:
      a. Providing of a secure way to expose a service and a capability of a 3GPP network function to an AF, for example, a game acceleration package or QoS control triggered by the outside
      b. Providing of a secure way for the AF to provide information for a 3GPP network function

The foregoing describes the architecture in embodiments of this application. The following describes methods in embodiments of this application in detail.

FIG. 3 is a schematic flowchart of an information processing method according to an embodiment of this application. Optionally, the method may be applied to the foregoing communication system, for example, the communication system shown in FIG. 1. The information processing method shown in FIG. 3 may include steps 301 to 303. Steps 301 to 303 are specifically as follows:

301: A first network element encrypts first information, to obtain a first ciphertext of the first information, where the first information includes a first keyword.

The first information includes the first keyword. The first keyword may be globally unique identifier information in the first information.

Optionally, the first keyword is at least one of a subscriber identifier and a device identifier. For descriptions of the subscriber identifier and the device identifier, refer to the following descriptions, and details are not described herein.

For example, if the first information includes a SUPI, the first keyword may include the SUPI. If the first information includes a PEI, the first keyword may include the PEI.

In a possible implementation, the first network element may be a data holder. For example, the first network element may be a network element in a home public land mobile network (home Public Land Mobile Network, HPLMN), a network element in a home network HPLMN for short, for example, a core network element (Network Function, NF), an authentication server function (Authentication Server Function, AUSF), or a UDM. For descriptions of the first network element, refer to the following descriptions of step 302, and details are not described herein.

The following describes the first information. The first information may be sensitive information. In a possible implementation, the first information may include user identity information. The user identity information may be, for example, at least one of the following:
(1) Subscriber identifier: The subscriber identifier may be a permanent identifier, for example, a subscription permanent identifier SUPI (an international mobile subscription identity IMSI, a network specific identifier NSI, a global line identifier GLI, a global cable identifier GCI, or the like), a generic public subscription identifier GPSI (a mobile subscriber international ISDN number MSISDN, an external identifier, or the like), or a self-control identity (self-control identity, scID). Alternatively, the subscriber identifier may be a temporary identifier, for example, a globally unique temporary UE identity (Globally Unique Temporary UE Identity, GUTI), a temporary mobile subscriber identity (Temporary Mobile Subscriber Identity, TMSI), a SUPI hash value, or a random ID.
(2) Device identifier: The device identifier may be a permanent identifier, for example, a permanent equipment identifier PEI (an international mobile equipment identifier IMEI, an IMEISV, an IEEE extended unique identifier EUI-64, or the like), or a MAC address. Alternatively, the device identifier may be a temporary identifier, for example, an IP address (an internet protocol version 4 (Internet Protocol version 4, IPv4), an internet protocol version 6 (Internet Protocol version 6, IPv6), or the like).
(3) User physiological characteristic: The user physiological characteristic may be, for example, a heartbeat, respiration, a voice characteristic, facial features, a fingerprint, or an iris.
(4) User digital asset and others: The user digital asset may be a digital avatar, for example, a virtual human. Alternatively, the user digital asset may be a digital item in a virtual world.

In another possible implementation, the first information may include user subscription information. The user subscription information may be general service data, for example, a user type, an access type, an access area, quality of service QoS, and a roaming restriction. The user subscription information may alternatively be a service profile Service Profile, for example, subscription mobility management (mobility management, MM)/session management (session management, SM), a slice service parameter, or a user-specific configuration and parameter (charging or the like).

In still another possible implementation, the first information may include sensing information. The sensing information may be, for example, location information, such as an access network E-UTRAN cell global identifier (E-UTRAN Cell Global Identifier, ECGI), a tracking area identity (Tracking Area Identity, TAI), or information such as longitude and latitude. Alternatively, the sensing information may be historical information, for example, a signaling history or a data access history. Certainly, the sensing information may be other sensing data (for example, characteristic information of an environment and/or an object in the environment, a distance (range) from the object, and an angle or an instantaneous linear velocity of the object). This is not limited in this solution.

In still another possible implementation, the first information may include authentication and/or key information. The authentication information may be, for example, an operator root key (for example, an operator variant algorithm configuration field (Operator Variant Algorithm Configuration Field, OP)), an authentication key (Key identifier, KI), a cryptographic key K4, or an operator code (operator code, Opc). The key information may be, for example, a root key K of a universal subscriber identity module (Universal Subscriber Identity Module, USIM), a key for user plane (user plane, UP) confidentiality and integrity protection, a key of a network element (for example, a key Kausf of a network element AUSF, a key Kseaf of a network element SEAF, a key Kamf of a network element AMF, or a root key Kgnb of a base station), or a key Kn3iwf of a non-3GPP access point.

It may be understood that the first information may further include at least two of the user identity information, the user subscription information, the sensing information, the authentication and/or key information, and the like. This is not limited in this solution.

The first information is described in the foregoing example. The first information may alternatively be other information such as device twin information. This is not limited in this solution.

The following describes how the first network element obtains the first ciphertext. In a possible implementation, the first network element encrypts the first information based on an encryption key, to obtain the first ciphertext of the first information.

For example, the first network element encrypts the first information based on the encryption key and an encryption parameter, to obtain the first ciphertext of the first information.

An encryption algorithm used by the first network element to encrypt the first information may be a homomorphic encryption algorithm, a symmetric searchable encryption algorithm constructed by using an advanced encryption standard (Advanced Encryption Standard, AES) symmetric cryptographic algorithm, a public key encryption-based searchable encryption algorithm constructed by using an asymmetric cryptographic algorithm (Rivest-Shamir-Adleman, RSA), or the like. This is not limited in this solution.

For example, an encryption key, an encryption parameter, and the like that correspond to the homomorphic encryption algorithm may include at least one of the following:
encryption parameters: a ciphertext modulus of *q,* a gadget decomposition (gadget decomposition) dimension of d, and the like. A homomorphic ciphertext belongs to an integer set *Z^{d}* or a polynomial ring ${R}_{q}^{d}$*,* where *Z^{d}* represents an integer set with a dimension of d, and ${R}_{q}^{d}$ represents a polynomial ring with a ciphertext modulus of q and a dimension of *d.*

An encryption key ***K_{enc}*** may be expressed as ***K_{enc}** = pk = (b, **a***), where b may be generated as follows: $b = \left(-a⋅s+e\right) ∈ {R}_{q}^{d}$*. **a*** is a common reference quantity (CRS, Common reference string), for example, a random polynomial vector $a ∈ {R}_{q}^{d}$*,* s = HMAC-SHA-256 (Key, FC ∥ P0 ∥ L0 ∥ P1 ∥ L1 ∥ P2 ∥ L2 ∥ P3 ∥ L3), and e represents random noise.

HMAC-SHA-256 refers to a specific key derivation algorithm for computing a hash-based message authentication code (Hash-based Message Authentication Code, HMAC) by using a hash function SHA256 (Secure Hash Algorithm with 256 bits).
FC = value for distinguishing between different examples of the algorithm.
P0 = serving network name; and L0 = serving network name length.
P1 = sequence number SQN; and L1 = sequence number SQN length.
P2 = encryption algorithm identifier; and L2 = algorithm identifier length.
P3 = SUPI; and L3 = SUPI length, where the parameters are available for UE-level keys and are unavailable for PLMN-level keys.
Key = *K_{AUSF}* (UE-level key); and Key = home network key (PLMN-level key).

For another example, the encryption parameter may further include a homomorphic encryption algorithm identifier: additive single homomorphic Paillier, multiplicative single homomorphic ElGamal, multiplicative single homomorphic RSA, homomorphic-like BGN 05, BGV (Brakerski, Gentry, Vaikuntanathan) (without bootstrapping: leveled homomorphic encryption; with bootstrapping: fully homomorphic encryption), BFV (Brakerski, Fan, Vercauteren), CKKS (Cheon, Andrey Kim, Miran Kim, Yongsoo Song), TFHE (Fully Homomorphic Encryption scheme over the Torus, TFHE), and others.

For another example, the encryption parameter may further include at least one of the following:
a security level *λ*; a decryption circuit depth p; a ciphertext modulus Q; a plaintext modulus t; an upper limit B of noise distribution or a noise standard variance; a number of decimal places corresponding to computational precision; and a vector dimension n for ciphertext computation.

An encryption party (for example, the UDM or the AUSF) encrypts a plaintext message *mᵢ*. This may be represented as follows: $ct = \left({c}_{0}, {c}_{1}\right) = \left(r⋅b+{m}_{i}+{e}_{1},r⋅a+{e}_{2}\right) ,$ where $r ∈ {R}_{q}^{d}$ is randomly selected.

*ct* is a ciphertext of the plaintext message *mᵢ,* $r ∈ {ℤ}_{q}^{N \times n}$ is a uniformly distributed random matrix, where *N > n, a* is a random vector related to key derivation, $b ∈ {ℤ}_{q}^{n} , a ∈ {ℤ}_{q}^{n}$*,* a positive integer n is a vector dimension, q is a ciphertext modulus, and a set ${Z}_{q} ≜ \left(-q/2, q/2\right] ∩ Z$ . For noise e ∈ *χ^{N},* noise distribution χ = χ(n) is a distribution set on Z, and discrete Gaussian distribution may be selected.

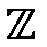 represents an integer set, ${ℤ}_{q}$ represents a value range of $\left[-q/2, q/2\right) ∩ ℤ$*,* and a subscript *q* of ${ℤ}_{q}$ is a ciphertext modulus. In other words, a modulo operation needs to be performed, based on q, on all numbers belonging to ${ℤ}_{q}$*.* A superscript *n* of ${ℤ}_{q}^{n}$ represents a vector dimension. A superscript *N* × *n* of ${ℤ}_{q}^{N \times n}$ represents a matrix dimension.

In a possible implementation, the encryption key is determined based on at least one of a home network key, a serving network name, a sequence number, an encryption algorithm identifier, and a common reference quantity.

For example, the first network element receives third information from a third network element, where the third information includes the encryption key. The third network element may perform key management, including key management such as key derivation, distribution, use, update, storage, and destruction.

For example, the third network element is a privacy computing management (Privacy computing management, PCM) unit. For example, the third network element is a PCM corresponding to a plaintext area.

For example, the PCM sets encryption parameters: the ciphertext modulus of *q,* the gadget decomposition gadget decomposition dimension of *d,* and the like. *Z^{d}* represents the integer set with a dimension of *d,* and ${R}_{q}^{d}$ represents the polynomial ring with a ciphertext modulus of *q* and a dimension of *d.*

The PCM generates a common reference quantity CRS: a random polynomial vector of $a ∈ {R}_{q}^{d}$ and a gadget decomposition vector of ***g*** ∈ *Z^{d}.*

The encryption key ***K_{enc}*** may be represented as: ***K_{enc}** = pk =* (***b**, **a***), where b may be generated as follows: $b = \left(-a⋅s+e\right) ∈ {R}_{q}^{d}$; and e represents random noise.

The first network element may encrypt the first information based on the encryption key.

In a possible implementation, the first network element performs initial encryption on the first information based on the encryption key, to obtain an initial ciphertext of the first information. The initial ciphertext may be understood as a ciphertext obtained by encrypting the first information based on the encryption key.

Further, the first network element performs blinding processing on the initial ciphertext of the first information, to obtain the first ciphertext of the first information.

The blinding processing may be understood as re-noising the initial ciphertext.

For example, a home network sends a homomorphic ciphertext of a plaintext "0" to a visited network in advance. The home network or the visited network performs addition or subtraction on a homomorphic ciphertext HE(m1) of plaintext information m1 and the homomorphic ciphertext of "0", to obtain a blinded homomorphic ciphertext HE'(m1).

The blinding processing may be expressed as: HE(m1) + HE(0) = HE'(m1). It may be understood that HE(m1) represents a ciphertext obtained by performing initial encryption on the plaintext information m1, that is, the foregoing initial ciphertext. HE'(m1) represents a ciphertext obtained by performing blinding processing on the homomorphic ciphertext HE(m1), that is, the foregoing first ciphertext.

It may be understood that plaintexts corresponding to the homomorphic ciphertext HE(m1) and the homomorphic ciphertext HE'(m1) are both m1, and the two homomorphic ciphertexts are different only in noise.

When re-encryption is not required, the blinding processing can enable same plaintext information to correspond to different ciphertexts, so that a second network element can be prevented from obtaining association information by directly comparing the received different ciphertexts.

In a possible implementation, the first network element further decrypts a received ciphertext based on a decryption key, to obtain a plaintext corresponding to the ciphertext. In this way, the first network element may directly process the plaintext, to achieve higher computation efficiency.

For example, the first network element obtains the decryption key from the third network element. For example, the third network element is a privacy computing management PCM unit.

Decryption key derivation may include the following parameters: $s = HMAC - SHA -256 \left(Key, FC\left‖P0\right‖L0\left‖P1\right‖L1\left‖P2\right‖L2\left‖P3\right‖L3\right) .$

A decryption key ${K}_{dec} = \left(1, s\right) ∈ {R}_{q}^{2}$ may be generated as described above. For descriptions of the parameter s, refer to the foregoing descriptions of the encryption key, and details are not described herein again.

For example, decryption *m̃* may be expressed as: *m̃ = ct(s)* = *c*₀ *+ c*₁***s** =* m + *e mod q. m* is plaintext information, and e represents random noise.

Based on the foregoing decryption, the first network element may obtain a plaintext of the first information through decryption, and the first network element may directly use the plaintext for computation.

302: The first network element sends second information to the second network element, where the second information includes the first ciphertext of the first information, a type of the first keyword, and a public key identifier. Correspondingly, the second network element receives the second information.

In a possible implementation, the second network element may be a data computing party. In a possible implementation, at least one of the first network element and the second network element is a network element in a radio network.

For example, the radio network is deployed as cells, and each cell has thousands of terminals wirelessly accessing a serving cell of the cell. Terminals such as a smart vehicle, a smartphone, and VR/AR configured with onboard units OBUs may have privacy computing capabilities. When privacy protection is required, generated data is encrypted and then transmitted to nodes such as another terminal node, a road side station RSU, a base station, a core network element NF, and a cloud vendor in a communication network for ciphertext-based privacy computing. Finally, ciphertext data obtained through computation is transmitted to a data user for decryption and use.

In a possible implementation, the first network element may be a network element in a home network HPLMN in a trust zone of the first information, and the second network element may be a network element in a visited public land mobile network (visited Public Land Mobile Network, VPLMN) in an untrust zone of the first information, which is referred to as a network element in a visited network VPLMN for short.

It may be understood that the trust zone or a privacy domain in this solution means that the plaintext of the first information can be obtained by a network element in the zone, and the untrust zone means that only the ciphertext of the first information can be obtained by a network element in the zone.

In a possible implementation, the first network element is a network element at a high trust level, and the second network element is a network element at a low trust level.

For example, the first network element is a network element at a high trust level that stores one or more of important data such as subscription data, an authentication parameter, a permanent identity, and a user root key in the home network. For example, the first network element is at least one of network elements such as an AUSF, a UDM, an authentication credential repository and processing function (Authentication Credential Repository and Processing Function, ARPF), and a subscription identifier de-concealing function (Subscription Identifier De-concealing Function, SIDF) in a 5G network.

For example, the second network element is a network element at a low trust level that provides one or more of functions such as a user plane function, session management, storage, and access management. For example, the second network element is at least one of network elements such as a UPF, an SMF, a PCF, a network repository function (Network Repository Function, NRF), a network slice selection function (Network Slice Selection Function, NSSF), and an AMF in the 5G network.

In a possible implementation, the first network element is a management plane network element, and the second network element is a control plane network element.

For example, the first network element is a management plane network element of a network element having a subscription data management function, and the second network element is a control plane network element. For example, the network elements are a management plane network element and a control plane network element of a UDM in a 5G network.

In a possible implementation, at least one of the first network element and the second network element is a virtual network element, and a trust zone of the first network element does not include the second network element. In other words, the first network element cannot send the plaintext of the first information to the second network element. For example, the first network element may be a virtual network element (Virtual Network Feature, VNF 1) in a trust zone of the first information, and the second network element may be a virtual network element VNF 2 in an untrust zone of the first information.

In a possible implementation, at least one of the first network element and the second network element is a radio access network RAN node, and a trust zone of the first network element does not include the second network element.

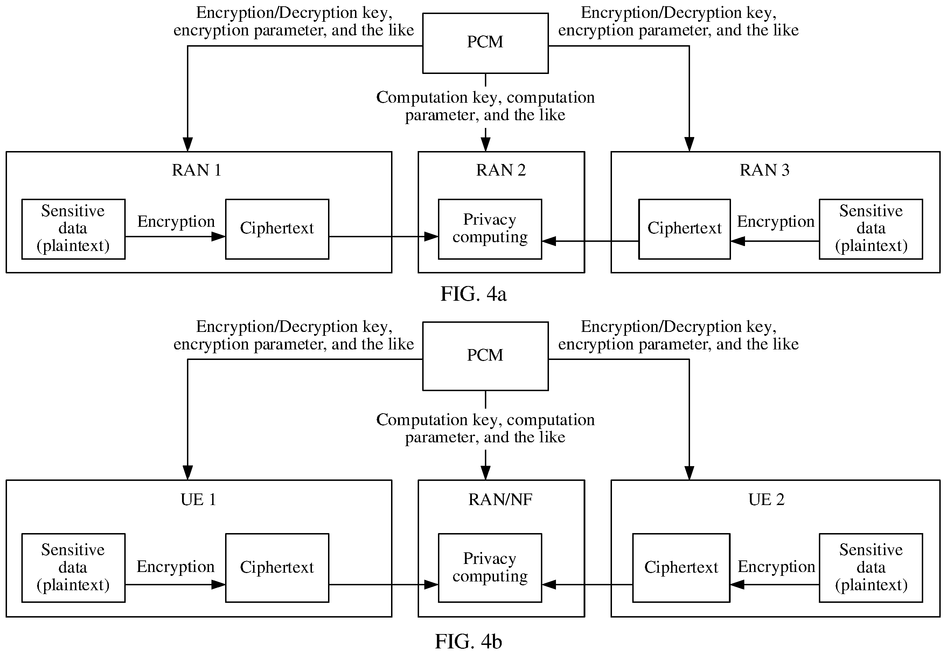

For example, the first network element may be a RAN node in a trust zone of the first information, and the second network element may be a RAN node in an untrust zone of the first information. As shown in FIG. 4a, a node RAN 1 and a node RAN 3 are in the trust zone of the first information, and a node RAN 2 is in the untrust zone of the first information. For example, a federated learning task is performed among the node RAN 1, the node RAN 2, and the node RAN 3. The node RAN 1 and the node RAN 3 locally perform training, encrypt a model gradient, and transmit an encrypted model gradient to the node RAN 2. After receiving a gradient ciphertext, the node RAN 2 performs an aggregation operation for federated learning based on the received ciphertext, for example, performs a FedAvg aggregation algorithm. The node RAN 2 then delivers an updated model parameter to the node RAN 1 and the node RAN 3.

In a possible implementation, the first network element is user equipment UE or an application APP server, and the second network element is a RAN node or a core network element.

For example, the first network element may be UE 1 or UE 2 in a trust zone of the first information, and the second network element may be a RAN node and/or a core network element NF in an untrust zone of the first information. As shown in FIG. 4b, the UE 1 and the UE 2 encrypt sensitive data and then transmit encrypted sensitive data to the RAN node and/or the core network element NF. After receiving a ciphertext, the RAN node and/or the core network element NF perform/performs privacy computing. The privacy computing management PCM unit sends the encryption key, the decryption key, the encryption parameter, and the like to the UE 1 and the UE 2. The PCM sends a computation key, a computation parameter, and the like to the RAN node and/or the NF.

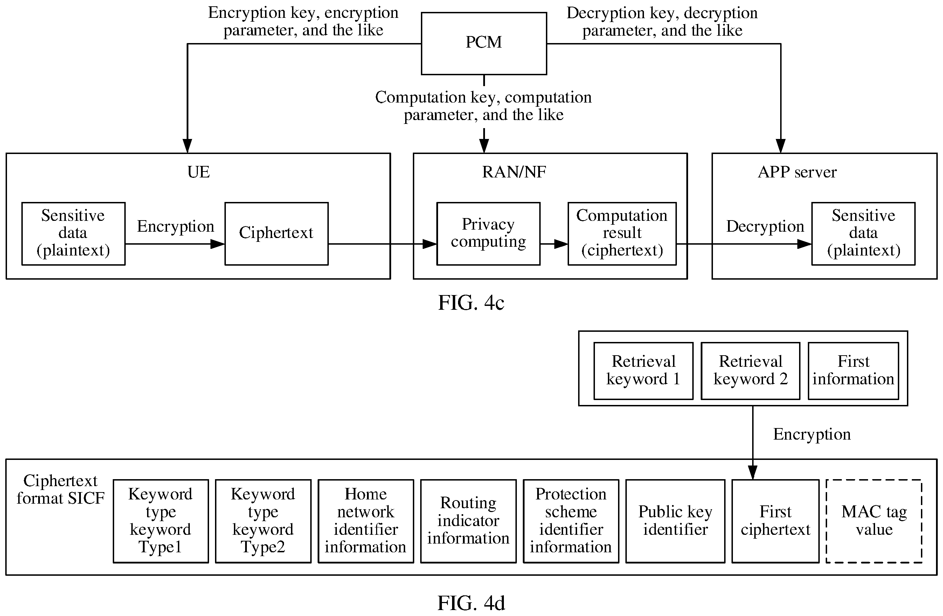

For another example, the first network element may be UE or an application APP server in a trust zone of the first information, and the second network element may be a network element in a radio network in an untrust zone of the first information, for example, a RAN node and/or an NF. As shown in FIG. 4c, the UE and the APP server encrypt sensitive data and then transmit encrypted sensitive data to the RAN node and/or the core network element NF. After receiving a ciphertext, the RAN node and/or the core network element NF perform/performs privacy computing. The privacy computing management PCM unit sends the encryption key, the decryption key, the encryption parameter, and the like to the UE and the APP server. The PCM sends a computation key, a computation parameter, and the like to the RAN node and/or the NF.

In a possible implementation, the first network element may be a third-party server or a network element in an application layer, and the second network element may be a network element in a radio network.

In a possible implementation, the first network element may be a network element in a radio network, and the second network element may be a third-party server or a network element in an application layer.

The foregoing describes the first network element and the second network element by using examples. The first network element and the second network element may alternatively be other network elements or the like. This is not limited in this solution.

The following describes the second information. The second information includes the first ciphertext of the first information, the type of the first keyword, and the public key identifier.

The type of the first keyword may be an identifier type. Optionally, the type of the first keyword may be represented in the following manner: [type type, subtype subtype].

The type is first-level classification for retrieval keywords. For example, a value of the type may be 0: SUPI; 1: PEI; 2: GPSI; or the like. The subtype is second-level classification for retrieval keywords. For example, if the type is a SUPI type, the subtype is a subtype of the SUPI, and may be selected from the following: a value 0: IMSI; a value 1: network specific identifier (Network Specific Identifier, NSI); a value 2: global line identifier (Global Line Identifier, GLI); and a value 3: global cable identifier (Global Cable Identifier, GCI).

The type of the first keyword in the second information is used by the second network element to find, when performing ciphertext retrieval, a ciphertext corresponding to the type of the first keyword.

The public key identifier may include at least one of a network identifier, a network element identifier, a subscriber identifier, a base station identifier (or location area identifier or the like), and a sequence number. The network identifier may be, for example, a PLMN ID, a CN ID, or a network identifier (Network Identifier, NID). The network element identifier may be, for example, an AMF ID or a radio network controller (Radio Network Controller, RNC) ID. The subscriber identifier may be, for example, the permanent identifier or the temporary identifier described in step 301, such as the SUPI or the scID. The location area or base station identifier may be, for example, a location area identity (Location Area Identity, LAI), a routing area identity (Routing Area Identity, RAI), a cell global identity (Cell Global Identity, CGI), or a base station identity code (Base Station Identity Code, BSIC). The sequence number may be, for example, an incremental sequence used to identify key update.

The public key identifier in the second information may be used to determine index information of a computation key required for ciphertext retrieval. For example, a PLMN-level computation key or a user-level computation key may be selected.

In a possible implementation, the second information further includes at least one of the following: a data category, home network identifier information, routing indicator information, and protection scheme identifier information.

The data category may include at least one of the following: an identity, a subscription, a location, an authentication/a key, and sensing.

The home network identifier information may be used to search a ciphertext area for a computation key.

The routing indicator information is allocated by a home network operator, and is used to route network signaling or data carrying the first ciphertext to a network element instance that can serve a user.

The protection scheme identifier information may indicate an encryption algorithm type, and may be determined during cryptographic algorithm and key agreement. For example, 0 indicates a null scheme; 1 indicates additive single homomorphic Paillier; 2 indicates multiplicative single homomorphic ElGamal; 3 indicates fully homomorphic encryption BGV; 4 indicates fully homomorphic encryption BFV; 5 indicates fully homomorphic encryption CKKS; and 6 indicates fully homomorphic encryption TFHE.

For example, as shown in FIG. 4d, the second information includes a type keyword Type1 of the first keyword, a public key identifier public key ID, and a first ciphertext ciphertext value of the first information. The second information further includes a type keyword Type2 of a second keyword, home network identifier Home Network Identifier information, routing indicator Routing Indicator information, and protection scheme identifier Protection Scheme Identifier information.

The type keyword Type2 of the second keyword may be a data category. For example, a value of a bit corresponding to the keyword Type2 is as follows: 0: identity; 1: subscription; 2: location; 3: authentication/key; 4: sensing; and others.

The type of the second keyword is used to determine a preset database. For example, one keyword type corresponds to at least one preset database. Optionally, different types correspond to different preset databases. For example, when the type of the second keyword is 1, the second network element performs ciphertext retrieval in a subscription database. For example, when the type of the second keyword is 4, the second network element performs ciphertext retrieval in a sensing database.

Optionally, the second information may further include a MAC tag value MAC tag value. The MAC flag value may be used for integrity protection.

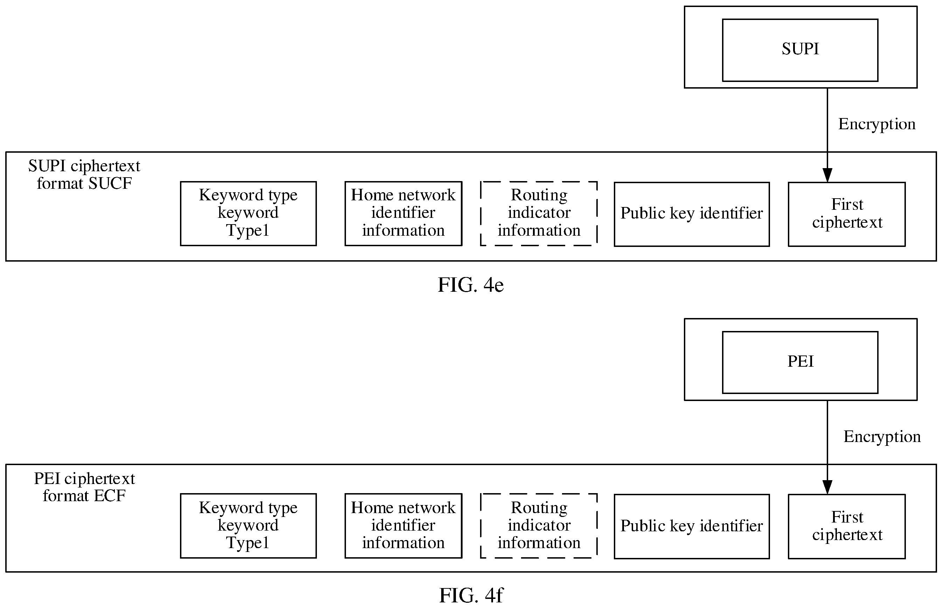

For example, FIG. 4e and FIG. 4f each show a ciphertext format (subscription concealed format, SUCF) of a SUPI and a ciphertext format (equipment concealed format, ECF) of a PEI according to an embodiment of this application. For example, the ciphertext format of the SUPI includes a type of a first keyword (for example, the SUPI), home network identifier information, routing indicator information (optional), a public key identifier, and a first ciphertext ciphertext value of the SUPI. The ciphertext format of the PEI includes a type of a first keyword (for example, the PEI), home network identifier information, routing indicator information (optional), a public key identifier, and a first ciphertext ciphertext value of the PEI.

The second information is described in the foregoing example. The second information may further include other information and the like. This is not limited in this solution.

303: The second network element determines, based on a ciphertext of the first keyword, the type of the first keyword, and the public key identifier, information about an association between a second ciphertext and the first ciphertext of the first information.

The association information may be understood as that both the second ciphertext and the first ciphertext of the first information are ciphertexts including a same keyword (the first keyword). That is, there is a correlation between the first ciphertext and the second ciphertext. For example, when the keyword is a subscription permanent identifier, both the first ciphertext and the second ciphertext are ciphertexts corresponding to the subscription permanent identifier, in other words, both the first ciphertext and the second ciphertext are related to the subscription permanent identifier.

The first ciphertext includes the ciphertext of the first keyword. The first ciphertext may further include a ciphertext of information in the first information other than the first keyword, and the like.

In a possible implementation, the second network element retrieves the second ciphertext from a preset database based on the ciphertext of the first keyword, the type of the first keyword, and the public key identifier.

For example, the first information corresponding to the first ciphertext not only includes the first keyword, but also includes sensing information. In addition, in the first information, the first keyword is arranged before the sensing information. In a possible implementation, the second network element intercepts the ciphertext of the first keyword from a front segment of the first ciphertext. In another possible implementation, after the user is successfully authenticated during network access, the second network element obtains the ciphertext of the first keyword sent by the first network element.

For example, the preset database stores at least one ciphertext. The second ciphertext is a ciphertext corresponding to fourth information in the preset database, and the fourth information includes the first keyword. The second network element may perform ciphertext retrieval in the preset database to obtain the second ciphertext.

The following describes the ciphertext retrieval. In a possible implementation, searching the preset database specifically includes: searching the preset database based on a ciphertext retrieval function.

For example, the ciphertext retrieval function is a ciphertext subtraction. If a subtraction of two ciphertexts is equal to a homomorphic ciphertext of "0", retrieval is considered successful. HE(m1) - HE(m2) = HE(0).

For another example, the ciphertext retrieval function is ciphertext division. If a quotient of two ciphertexts is equal to a homomorphic ciphertext of "1", retrieval is considered successful. $HE \left(m1\right) / HE \left(m2\right) = HE \left(1\right) .$ (1)

The second network element may obtain, through retrieval based on the ciphertext of the first keyword, the type of the first keyword, and the public key identifier, a ciphertext (for example, the second ciphertext) required by the second network element. Information about an association between the ciphertext obtained through retrieval and the first ciphertext of the first information is determined based on the ciphertext obtained through retrieval.

In a possible implementation, the second network element determines a target key from one or more computation keys based on the public key identifier. The public key identifier may be used to determine index information of a computation key required for ciphertext retrieval. For example, a PLMN-level computation key or a user-level computation key may be selected. The second network element determines the target key from the one or more computation keys based on the index information that is of the computation key and that is determined by using the public key identifier.

Further, the second network element retrieves the second ciphertext from the preset database based on the ciphertext of the first keyword, the type of the first keyword, and the target key. For example, the second network element first selects the preset database based on the type of the first keyword, and the second network element performs ciphertext retrieval based on the ciphertext of the first keyword, the target key, and the ciphertext in the preset database. A ciphertext retrieval function used for ciphertext retrieval may be the foregoing ciphertext subtraction, ciphertext division, or the like.

For example, the computation key (target key) may be used to perform ciphertext computation (for example, a product or another operation, or a logical AND gate), and may be further used to control noise growth, ciphertext size extension, or the like. The foregoing ciphertext retrieval function (that is, ciphertext subtraction, ciphertext division, or the like) may be constructed by performing computation such as the product or another operation, or the logical AND gate.

In a possible implementation, the second network element may further compute the third ciphertext based on the computation key, to obtain a fourth ciphertext. Then, the second network element sends the fourth ciphertext to a fifth network element. The fifth network element may decrypt the fourth ciphertext based on the decryption key.

In a possible implementation, the third ciphertext may be the foregoing first ciphertext.

In a possible implementation, the fifth network element may be a network element in the plaintext area. For example, the preset network element is the foregoing first network element.

Optionally, the second network element receives fifth information from a fourth network element, where the fifth information includes the one or more computation keys. The fourth network element may be a privacy computing management PCM unit. For descriptions of the fourth network element, refer to the foregoing descriptions of the third network element, and details are not described herein again. For example, the fourth network element is a PCM corresponding to the ciphertext area.

It may be understood that the fifth information may further include one or more computation parameters. The following lists the computation parameter and the computation key.

For the homomorphic encryption algorithm, the homomorphic computation key may also be referred to as a homomorphic evaluation key, and is used to perform homomorphic computation (which is usually a homomorphic product or another equivalent operation, a logical AND gate, or the like) during homomorphic evaluation, and used to control noise growth or ciphertext size extension. Homomorphic computation keys generally include types such as a bootstrapping key and a key switching key. For example, when the homomorphic encryption algorithm BFV (Brakerski, Fan, Vercauteren) is for performing the homomorphic product, each ciphertext has two ciphertext components, and three ciphertext components appear in an output result of a homomorphic product of two ciphertexts, causing ciphertext size expansion. In addition, a key corresponding to a ciphertext in the output result involves an exponential item. Therefore, the homomorphic computation key needs to be used for adjustment to obtain a final output result with a ciphertext with a correct dimension as the homomorphic product.

Different from other methods, the homomorphic encryption algorithm TFHE proposes a special bootstrapping algorithm, which is very fast and can perform homomorphic evaluation on functions while reducing noise. For example, the TFHE may be for performing operations such as ciphertext computation AND in a gate bootstrapping execution process, and a bootstrapping key and a key switching key are required.

The homomorphic encryption algorithm TFHE algorithm is used as an example. Homomorphic computation parameters include a security level *λ*, LWE dimensions at three levels, a ciphertext modulo Q, a basis of gadget decomposition in an external product during functional bootstrapping, a length of gadget decomposition in the external product, a basis of gadget decomposition during key switching, and a length of gadget decomposition during key switching.

The homomorphic computation key ***Keyₑᵥₐₗ*** is, for example, a BSK bootstrapping key or a KSK key switching key. The bootstrapping key is a key used for noise reduction via bootstrapping during homomorphic computation. The key switching key is used to resolve a case in which key switching needs to be performed in a homomorphic computation process, for example, a key cross item is eliminated after homomorphic multiplication, or keys at different levels need to be switched during circuit bootstrapping.

A homomorphic computation key size is, for example, KSK key switching key *nₛ* × (*nₜ* + 1) or a BSK key size.

Homomorphic computation keys include:
(1) Level 0 to Level 2 multi-value functional bootstrapping: Bootstrapping key.
(2) Level 2 to level 1: Key switching key and scheme switching key.
(3) Level 1 to level 0: Key switching key.

Table 2 shows examples of parameter sets of different levels of fully homomorphic encryption algorithms TFHE provided in this embodiment of this application.

**Table 2**

| Level | Example of a parameter set of a fully homomorphic encryption algorithm TFHE | |
|---|---|---|
| Level 0 | | Ciphertext modulus Q = 2³²; and LWE dimension: n = 635 |
| | Standard deviation of noise: *α* = 2⁻¹⁵ | |
| Level 1 | Ciphertext modulus Q = 2³²; and dimension of an RLWE ring polynomial: N = 1024 | |
| | Length of RGSW gadget decomposition: *l* = 3 | |
| | | Basis of RGSW gadget decomposition: *B_{g}* = 2⁶ |
| | Standard deviation of noise: α = 2⁻²⁵ | |
| Level 2 | Ciphertext modulus Q̅ = 2⁶⁴; and dimension of an RLWE ring polynomial: *N̅* = 2048 | |
| | | Length of RGSW gadget decomposition: *l̅* = 4 |
| | Basis of RGSW gadget decomposition: B̅_̅{̅g̅}̅ = 2⁹ | |
| | Standard deviation of noise: *α̅* = 2⁻⁴⁴ | |
| Level 1→0 | Length of gadget decomposition during key switching: t = 7 | |
| | Basis (Basis) of gadget decomposition during key switching: *B_{g}* = 2² | |
| Level 2→1 | Length of gadget decomposition during key switching: *t̅* = 10 | |
| | Basis of gadget decomposition during key switching: B̅_̅{̅g̅}̅ = 2³ | |

In a possible implementation, after determining the information about the association between the second ciphertext and the first ciphertext of the first information, the second network element may perform classified storage, other processing, and the like. For example, after it is determined that both the first ciphertext and the second ciphertext are ciphertexts of a terminal 1, both the first ciphertext and the second ciphertext are stored in information corresponding to the terminal 1.

In this embodiment of this application, the first network element encrypts the first information, to obtain the first ciphertext of the first information, and then the first network element sends the second information to the second network element. The second network element determines, based on the ciphertext of the first keyword, the type of the first keyword, and the public key identifier in the second information, the information about the association between the second ciphertext and the first ciphertext of the first information. In this method, the second network element cannot learn of the plaintext of the first information, so that privacy protection can be implemented. In addition, the second information further includes the type of the first keyword and the public key identifier, so that the second network element can perform ciphertext retrieval based on the type of the first keyword and the public key identifier, and further perform ciphertext computation. In other words, information or data can be exchanged and used while privacy protection is implemented.

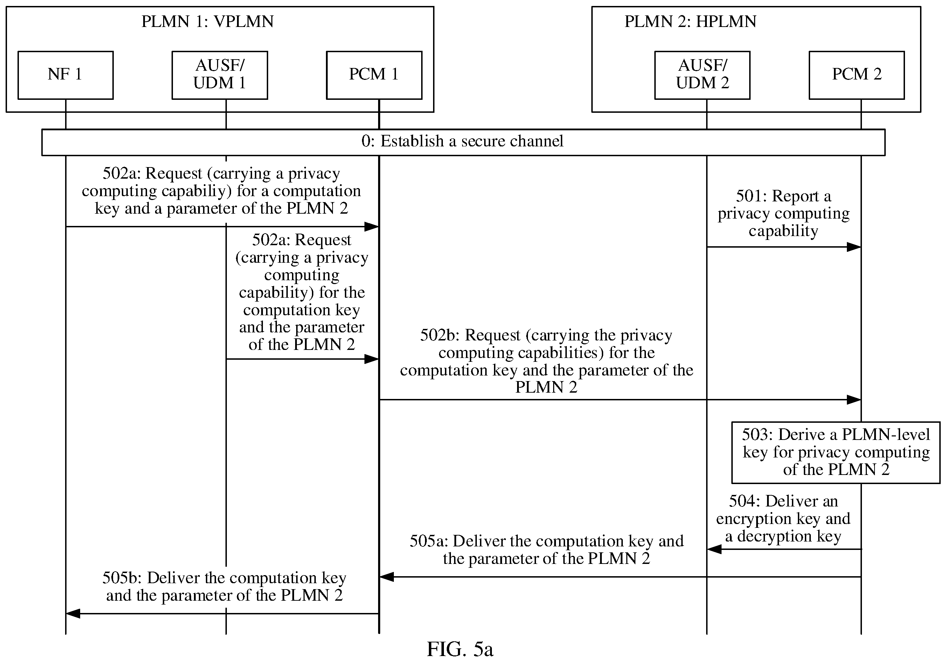

FIG. 5a is a schematic flowchart of key derivation and distribution according to an embodiment of this application. In this example, a first network element may be a network element in a home network HPLMN, and a second network element is a network element in a visited network VPLMN. For example, a key is PLMN-level key derivation. The procedure may include steps 501 to 505b, which are specifically as follows:
501: After a secure channel between a home network PLMN 2 (that is, the HPLMN) and a visited network PLMN 1 (that is, the VPLMN) is established, a network element such as an AUSF/a UDM in the home network PLMN 2 reports a privacy computing capability of the network element to a privacy computing management PCM 2 unit in the same PLMN.
502a: Network elements such as an NF 1 and an AUSF/a UDM in the visited network PLMN 1 report their privacy computing capabilities to a privacy computing management PCM 1 unit in the same PLMN, and request a computation key and a parameter of the PLMN 2.
502b: The PCM 1 sends a request to the PCM 2 in the home network PLMN 2 to apply for the computation key and the parameter, where the request carries the privacy computing capabilities of the network elements in the visited network.
503: The PCM 2 in the home network selects an encryption algorithm and derives a PLMN-level key based on the privacy computing capabilities of the visited network and the home network.

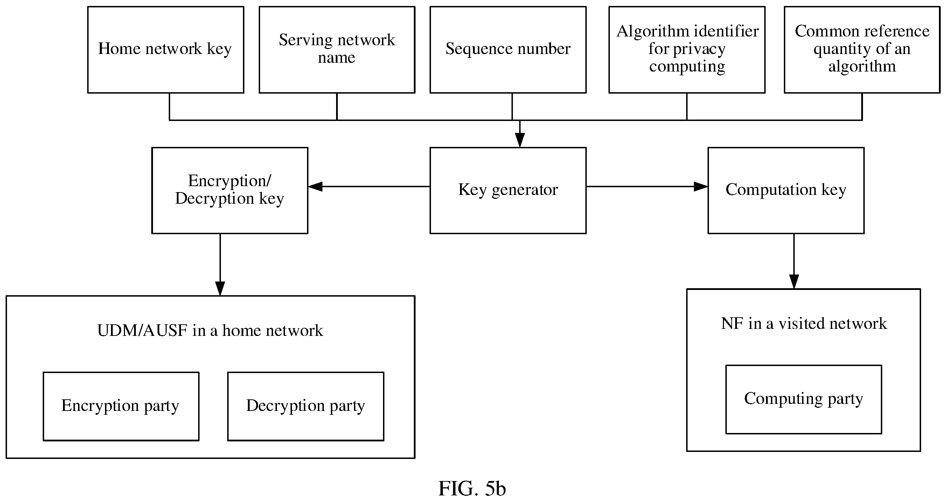

As shown in FIG. 5b, input parameters for key derivation include: a home network key, a serving network name, a sequence number, an algorithm identifier for privacy computing, a common reference quantity of the algorithm, and the like. These parameters are input into a key generator to obtain an encryption key, a decryption key, the computation key, and the like.

The encryption key is used by an encryption party to encrypt plaintext information, the decryption key is used by a decryption party to decrypt a ciphertext, and the computation key is used by a computing party to process the ciphertext.

504: The PCM 2 in the home network delivers the encryption key, the decryption key, the parameter, and the like to the AUSF/UDM in the home network.

505a: The PCM 2 in the home network delivers the computation key and the parameter to the PCM 1 in the visited network PLMN 1.

505b: The PCM 1 delivers the computation key and the parameter to the NF 1 in the visited network.

Based on the foregoing key derivation and distribution, for example, after UE completes access authentication, the visited network requests sensitive information from the home network, and a network element at a high trust level such as the AUSF/UDM in the home network encrypts the sensitive information to obtain a sensitive information concealed format (Sensitive information Concealed format, SICF), so that the home network delivers a ciphertext of the sensitive information to a network element in the visited network.

In another possible implementation, the encryption key is determined based on at least one of a user key, a serving network name, a sequence number, a subscriber identifier, an algorithm identifier, and a common reference quantity. For example, the third network element is a privacy computing management PCM unit.

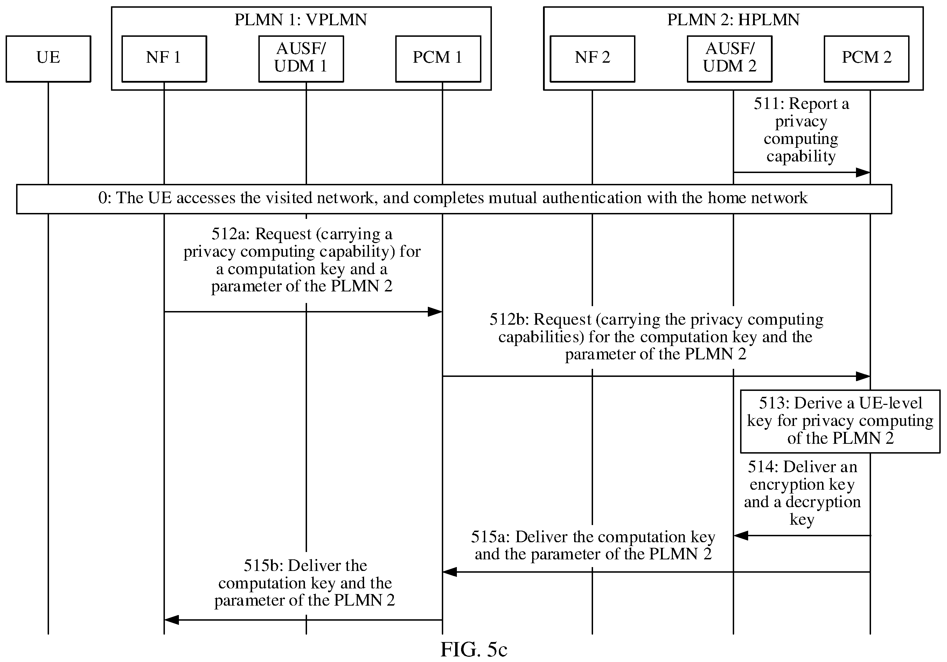

FIG. 5c is another schematic flowchart of key derivation and distribution according to an embodiment of this application. For example, a key is UE-level key derivation. The procedure may include steps 511 to 515b, which are specifically as follows:
511: After UE completes access authentication, a network element such as an AUSF/a UDM in a home network PLMN 2 reports a privacy computing capability of the network element to a privacy computing management PCM 2 unit in the same PLMN.
512a: Network elements such as an NF 1 and an AUSF/a UDM in a visited network PLMN 1 report their privacy computing capabilities to a privacy computing management PCM 1 unit in the same PLMN, and request a computation key and a parameter of the PLMN 2.
512b: The PCM 1 sends a request to the PCM 2 in the home network PLMN 2 to apply for the computation key and the parameter, where the request carries the privacy computing capabilities of the network elements in the visited network.
513: The PCM 2 in the home network selects an algorithm for privacy computing and derives a UE-level key based on the privacy computing capabilities of the visited network and the home network.

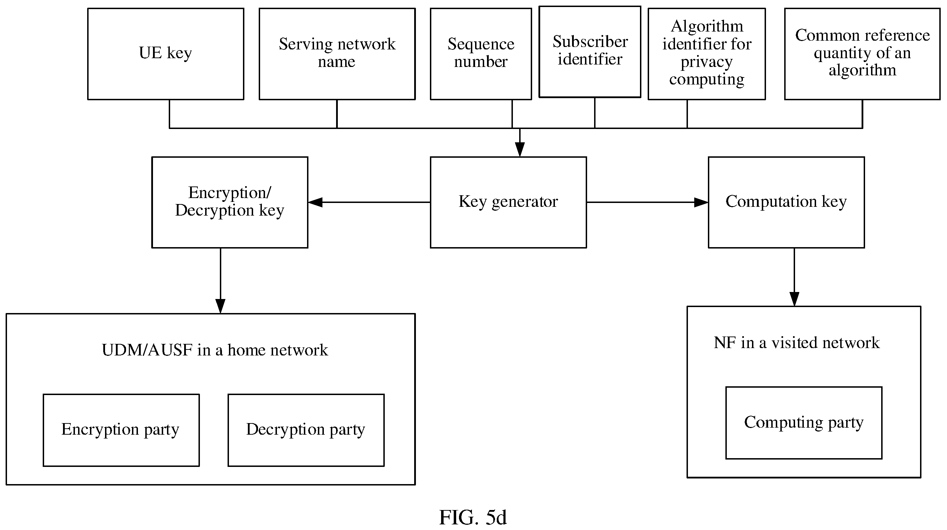

As shown in FIG. 5d, input parameters for key derivation are a UE key, a serving network name, a sequence number, a subscriber identifier, an algorithm identifier, a common reference quantity, and the like. These parameters are input into a key generator to obtain an encryption key, a decryption key, the computation key, and the like.

The UE key may be obtained from a key management center (key management center, KMC), or may be generated based on a universal mobile telecommunications system (Universal Mobile Telecommunications System, UMTS) subscriber identity module (UMTS subscriber identity module, USIM) key architecture. This is not limited in this solution. In step 511, after the UE completes access authentication, the UE and the network have derived a symmetric key architecture of a user. If the UE-level key is derived based on the USIM key architecture, a key in the USIM key architecture may be used as an input of a key derivation function, such as Kseaf or Kamf.

514: The PCM 2 in the home network delivers the encryption key, the decryption key, the parameter, and the like to the AUSF/UDM in the home network.

515a: The PCM 2 in the home network delivers the computation key and the parameter to the PCM 1 in the visited network PLMN 1.

515b: The PCM 1 delivers the computation key and the parameter to the NF 1 in the visited network.

Based on the foregoing key derivation and distribution, for example, the visited network sends a request for sensitive information to the home network, and a network element at a high trust level such as the AUSF/UDM in the home network encrypts the sensitive information to obtain a ciphertext SICF, so that the home network delivers a ciphertext of the sensitive information to a network element in the visited network. The UE-level key has a smaller key granularity and stronger privacy protection.

In FIG. 5a and FIG. 5c, PLMN-level key derivation and UE-level key derivation are respectively used as examples for description, and other keys may alternatively be used. This is not limited in this solution.

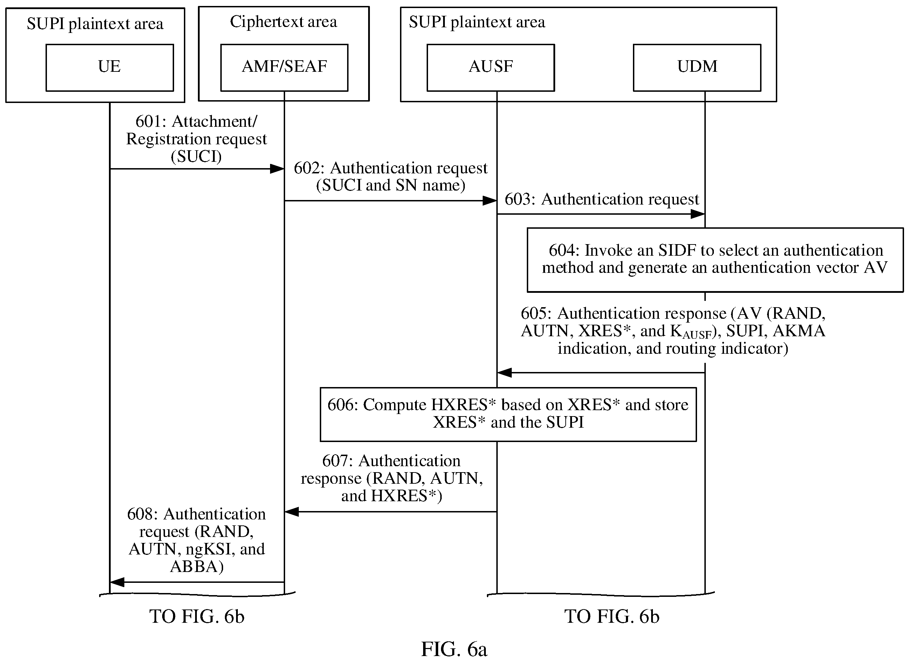

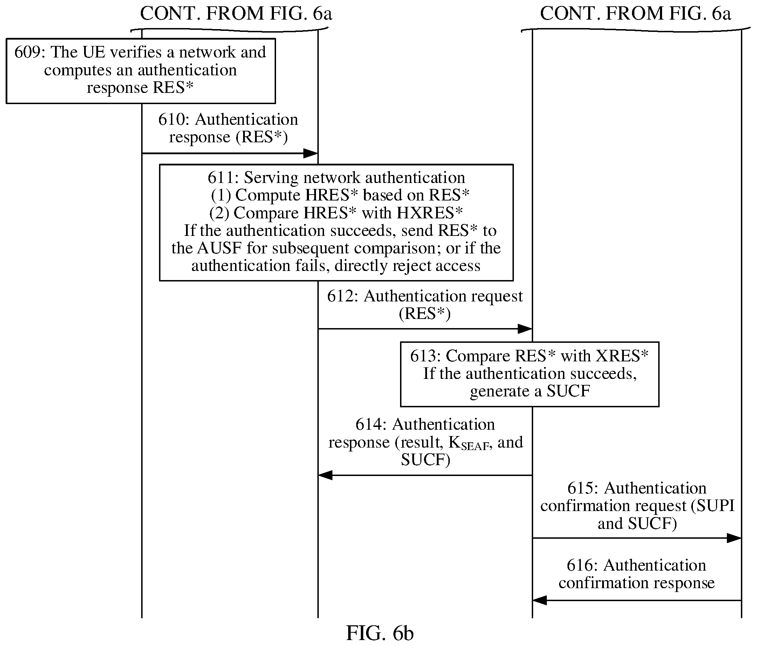

FIG. 6a and FIG. 6b are a schematic flowchart of an authentication and key agreement method according to an embodiment of this application. In this example, an example in which first information includes a user identity SUPI is used for description. The method shown in FIG. 6a and FIG. 6b may include steps 601 to 616. In this example, network elements AUSF, a UDM, and UE at a high trust level in a plaintext area are used as an example, and a network element SEAF/AMF at a low trust level in a ciphertext area is used as an example for description. Steps 601 to 616 are specifically as follows:
601: The UE sends an attachment request/a registration request to the SEAF/AMF, where the attachment/registration request includes a subscription concealed identifier (subscription concealed identifier, SUCI). Correspondingly, the SEAF/AMF receives the attachment/registration request.
602: The SEAF/AMF sends an authentication request to the AUSF, where the authentication request includes the SUCI and a serving network (serving network, SN) name. Correspondingly, the AUSF receives the authentication request.
603: The AUSF sends an authentication request to the UDM. Correspondingly, the UDM receives the authentication request.
604: The UDM invokes an SIDF to select an authentication method and generate an authentication vector AV.
605: The UDM sends an authentication response to the AUSF. Correspondingly, the AUSF receives the authentication response.

The authentication response includes an AV (RAND, an authentication token (authentication token, AUTN), XRES*, and K_{AUSF}), a SUPI, an indication of authentication and key management for applications (Authentication and Key Management for Applications, AKMA), and a routing indicator.

For example, the AUSF/mobile equipment (Mobile Equipment, ME) derives a key *K_{SEAF}* based on an upper-level key *K_{AUSF}* and input parameters such as the SUPI and the SN name.

The security anchor function SEAF/ME derives a key *K_{AMF}* based on and the upper-level key *K_{SEAF}* and an input parameter such as ABBA.

606: The AUSF computes HXRES* based on XRES* and stores XRES* and the SUPI.

607: The AUSF sends an authentication response to the SEAF/AMF, where the authentication response includes RAND, the AUTN, and HXRES*. Correspondingly, the SEAF/AMF receives the authentication response.

608: The SEAF/AMF sends an authentication request to the UE, where the authentication request includes parameters such as RAND, the AUTN, a next generation key set identifier (next generation key set identifier, ngKSI), and a network degradation attack prevention (Anti-Bidding down Between Architectures, ABBA). Correspondingly, the UE receives the authentication request.

609: The UE verifies a network and computes an authentication response RES*.

610: The UE sends the authentication response to the SEAF/AMF, where the authentication response includes RES*. Correspondingly, the SEAF/AMF receives the authentication response.

611: The SEAF/AMF authenticates the serving network. The SEAF/AMF computes HRES* based on RES* and compares HRES* with HXRES*. If HRES* is the same as HXRES*, it indicates that the authentication succeeds, and the SEAF/AMF sends RES* to the AUSF for subsequent verification and comparison. If HRES* is different from HXRES*, it indicates that the authentication fails, and access is directly rejected.

612: The SEAF/AMF sends an authentication request to the AUSF, where the authentication request includes RES*. Correspondingly, the AUSF receives the authentication request.

613: The AUSF compares the authentication response RES* sent by the UE with the authentication response XRES* computed by a network side. If RES* is the same as XRES*, it indicates that the authentication succeeds. After the authentication succeeds, the AUSF generates a ciphertext SUCF of the SUPI.

The ciphertext SUCF of the SUPI is an example of the second information described above. For specific content, refer to the foregoing descriptions.

614: The AUSF sends an authentication response to the SEAF/AMF, where the authentication response includes a result result, K_{SEAF}, and the ciphertext SUCF of the SUPI. Correspondingly, the SEAF/AMF receives the authentication response.

For example, the SEAF/AMF stores the ciphertext SUCF of the SUPI, so that when other information is subsequently received, information related to a ciphertext SUCF of a keyword is obtained based on the ciphertext SUCF of the keyword, and associated storage, a corresponding operation, and the like are performed.

615: The AUSF further sends an authentication confirmation request to the UDM, where the authentication confirmation request includes a plaintext and the ciphertext SUCF of the SUPI. Correspondingly, the UDM receives the authentication confirmation request.

616: The UDM sends an authentication confirmation response to the AUSF. Correspondingly, the AUSF receives the authentication confirmation response.

In this example, permanent identity information is concealed from the serving network, and the plaintext of the SUPI is no longer delivered to a ciphertext area (for example, the SEAF/AMF), to enhance privacy protection of the identity SUPI.

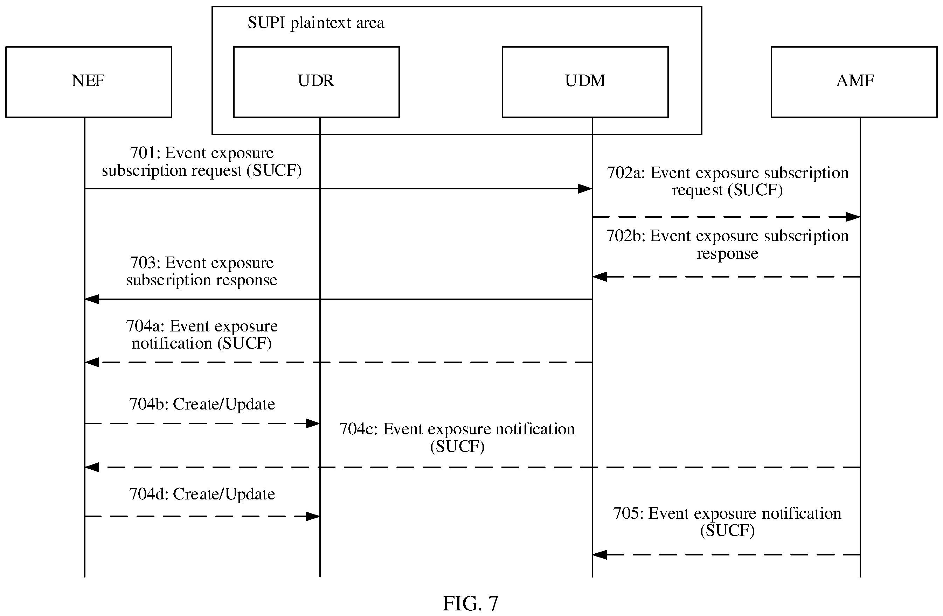

FIG. 7 is a schematic flowchart of another information processing method according to an embodiment of this application. In this example, an example in which first information is a SUPI is used, and an example in which a plaintext area includes network elements UDR and UDM, and a ciphertext area includes, for example, network elements NEF and AMF is used for description. The information processing method shown in FIG. 7 may include steps 701 to 705. Steps 701 to 705 are specifically as follows:

701: The NEF sends an event exposure subscription request to the UDM, where the subscription request includes a UE ID ciphertext (SUCF), an operation indication, a report type, a maximum quantity of reports, duration, and the like. Correspondingly, the UDM receives the subscription request.

702a: The UDM sends an event exposure subscription request to all related AMFs, where the subscription request includes the UE ID ciphertext (SUCF) and the operation indication. Correspondingly, the AMF receives the subscription request.

702b: The AMF sends an event exposure subscription response to the UDM to confirm subscription. Correspondingly, the UDM receives the subscription response.

703: The UDM sends an event exposure subscription response to the NEF to confirm subscription. Correspondingly, the NEF receives the subscription response.

704a: The UDM detects occurrence of a monitored event, sends an event exposure notification to the NEF, and sends an event report and a timestamp to the NEF, including the UE ID ciphertext (SUCF). Correspondingly, the NEF receives the notification.

The NEF may perform associated storage and other processing on subsequent information based on the received UE ID ciphertext (SUCF).

704b: The NEF sends a creation request/an update request to the UDR, and stores the received notification in the UDR.

704c: The AMF detects occurrence of a monitored event, sends an event exposure notification to the NEF, and sends an event report and a timestamp to the NEF, including the UE ID ciphertext (SUCF). Correspondingly, the NEF receives the notification.

704d: The NEF sends a creation request/an update request to the UDR, and stores the received notification in the UDR.

705: The AMF detects occurrence of an event related to a subscription change (such as AMF re-allocation or new group UE registration) and sends an event exposure notification to the UDM, where the notification includes the UE ID ciphertext (SUCF). Correspondingly, the UDM receives the notification.

If a subscription permanent identifier (SUPI) is provided for a serving network in a plaintext form, there are many security threats. In this embodiment of this application, the SUPI is no longer provided for the serving network in the plaintext form, to ensure enhancement required for security and privacy of the SUPI in the serving network, and a network interaction service is also normally provided.

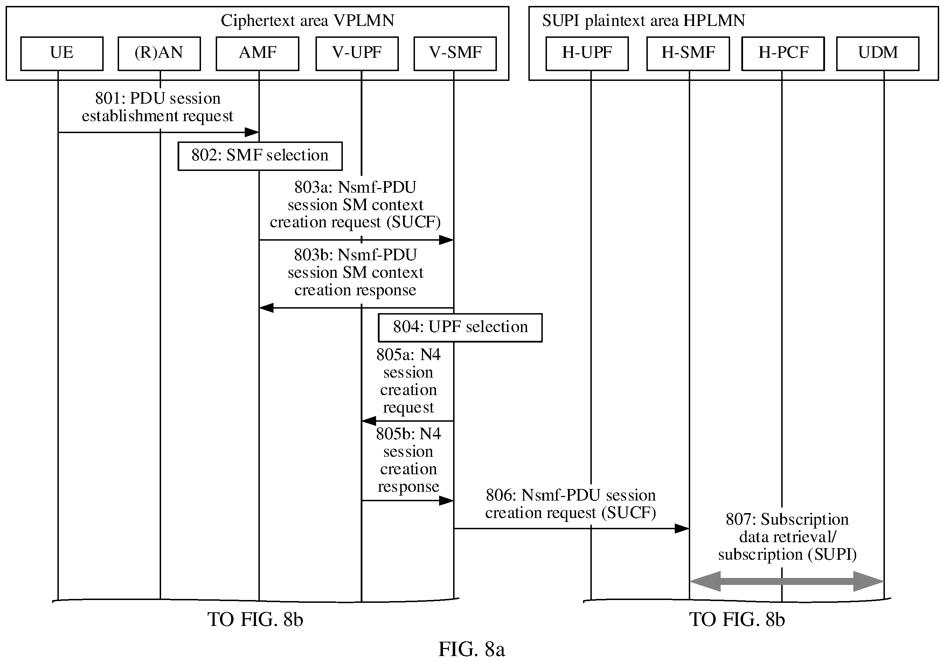

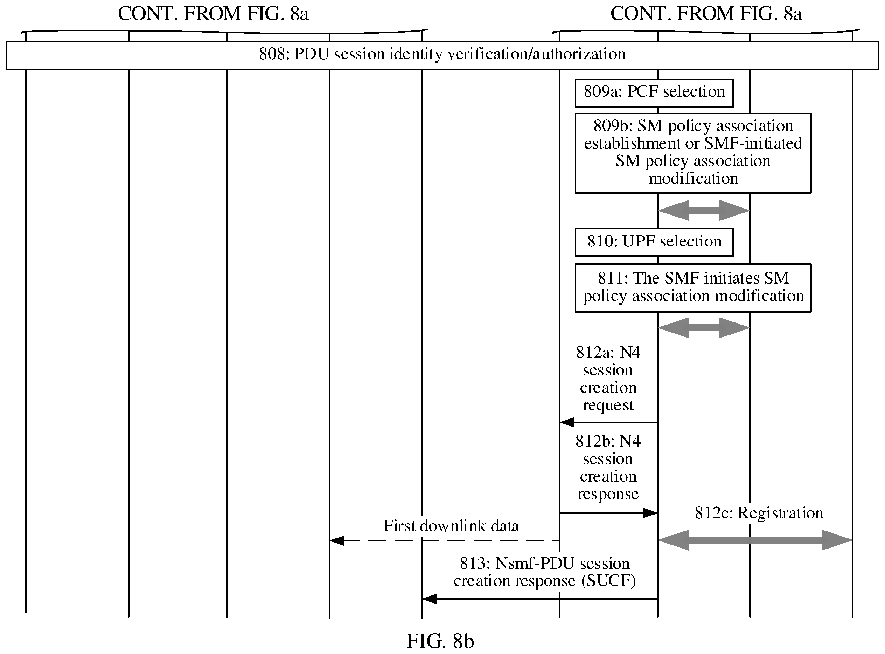

FIG. 8a and FIG. 8b are a schematic flowchart of still another information processing method according to an embodiment of this application. In this example, an example in which a plaintext area includes a home user plane function (home user plane function, H-UPF) network element, a home session management function (home Session Management Function, H-SMF) network element, a home policy control function (home policy control function, H-PCF), and a UDM is used as an example, and an example in which a ciphertext area includes network elements UE, a (R)AN, an AMF, a visited user plane function (visited user plane function, V-UPF), and a visited session management function (visited Session Management Function, V-SMF) network element is used as an example for description. The information processing method shown in FIG. 8a and FIG. 8b may include steps 801 to 813. Steps 801 to 813 are specifically as follows:

801: The UE sends a PDU session creation request to the AMF. Correspondingly, the AMF receives the request.

802: The AMF selects an SMF.

A selection result of the AMF includes the V-SMF.

803a: The AMF sends an SM context creation request to the V-SMF, where the request includes a UE ID ciphertext (SUCF), network slice selection assistance information (Network Slice Selection Assistance Information, NSSAI), an H-SMF identifier, and the like. Correspondingly, the V-SMF receives the request.

803b: The V-SMF sends an SM context creation response to the AMF. Correspondingly, the AMF receives the response.

804: The V-SMF selects a UPF.

A selection result of the V-SMF includes the V-UPF.

805a: The V-SMF sends a session creation request to the V-UPF through an N4 interface. Correspondingly, the V-UPF receives the request.

The N4 interface is an interface between the SMF and the UPF.

805b: The V-UPF sends a session creation response to the V-SMF through the N4 interface. Correspondingly, the V-SMF receives the response.

806: The V-SMF sends a PDU session creation request to the H-SMF, where the request includes the UE ID ciphertext (SUCF), a GPSI, a V-SMF SM context ID, a data network name DNN, S-NSSAI, a PDU session ID, a V-SMF identifier, and the like. Correspondingly, the H-SMF receives the request.

807: The H-SMF may choose to use a service operation such as Nudm_SDM_Get or Nudm_SDM_Subscribe to obtain session management subscription data, where service operation signaling includes a UE ID (SUPI).

808: PDU session identity verification/authorization.

809a: The H-SMF selects a PCF.

809b: The H-SMF performs SM policy association establishment or SMF-initiated SM policy association modification.

810: The H-SMF selects a UPF.

811: The H-SMF initiates SM policy association modification.

812a: The H-SMF sends an N4 session creation request to the H-UPF. Correspondingly, the H-UPF receives the request.

812b: The H-UPF sends an N4 session creation response to the H-SMF. Correspondingly, the H-SMF receives the response.

812c: The H-SMF performs registration.

813: The H-SMF sends a PDU session creation response to the V-SMF, where the response includes the UE ID ciphertext (SUCF), and the like. Correspondingly, the V-SMF receives the response.

If a subscription permanent identifier (SUPI) is provided for a serving network in a plaintext form, there are many security threats. In this embodiment of this application, the SUPI is no longer provided for the serving network in the plaintext form, to ensure enhancement required for security and privacy of the SUPI in the serving network, and a network interaction service is also normally provided.

It should be noted that, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The methods in embodiments of this application are described in detail above. Apparatuses in embodiments of this application are provided below. It may be understood that, in apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus configured to implement any one of the foregoing methods. For example, an information processing apparatus is provided, and includes modules (or means) configured to implement steps performed by the first network element, the second network element, the third network element, the fourth network element, and the like in any one of the foregoing methods.

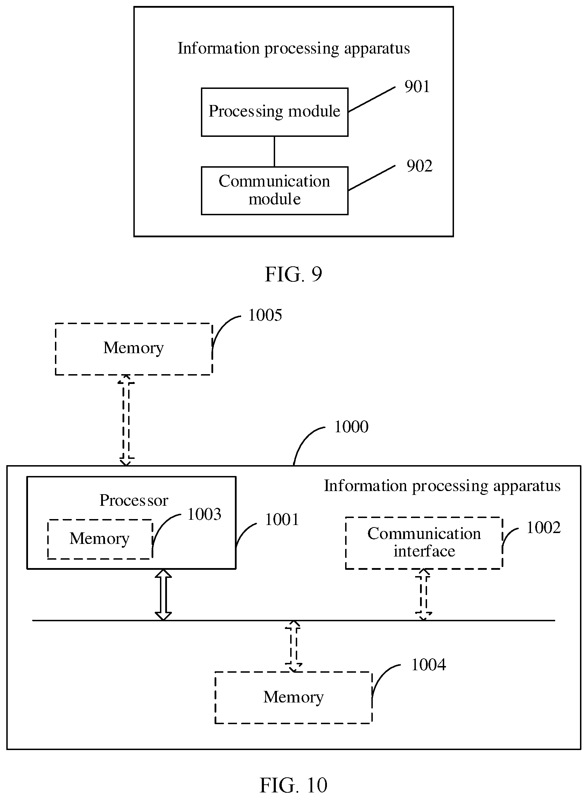

For example, FIG. 9 is a diagram of a structure of an information processing apparatus according to an embodiment of this application. The information processing apparatus is configured to implement steps (or means) performed by the first network element in the foregoing information processing method.

As shown in FIG. 9, the apparatus may include a processing module 901 and a communication module 902. Details are as follows: The processing module 901 is configured to encrypt first information, to obtain a first ciphertext of the first information, where the first information includes a first keyword. The communication module 902 is configured to send second information to a second network element, where the second information includes the first ciphertext of the first information, a type of the first keyword, and a public key identifier.

For another optional implementation of the apparatus, refer to the foregoing descriptions. Details are not described herein again.

For another example, an information processing apparatus is provided, and includes modules (or means) configured to implement steps performed by the second network element in any one of the foregoing methods.

As shown in FIG. 9, the apparatus may include a processing module 901 and a communication module 902. Details are as follows:

The communication module 902 is configured to receive second information from a first network element, where the second information includes a first ciphertext of first information, a type of a first keyword, and a public key identifier, and the first information includes the first keyword.

The processing module 901 is configured to determine, based on a ciphertext of the first keyword, the type of the first keyword, and the public key identifier, information about an association between a second ciphertext and the first ciphertext of the first information.

For another optional implementation of the apparatus, refer to the foregoing descriptions. Details are not described herein again.

For another example, an information processing apparatus is provided, and includes modules (or means) configured to implement steps performed by the third network element in any one of the foregoing methods.

The information processing apparatus includes: a communication module, configured to receive a first request, where the first request is used to obtain an encryption key, and the first request further includes a privacy computing capability of a first network element.

The communication module is further configured to send third information, where the third information includes at least one of the encryption key, an encryption parameter, and a decryption key.

For another optional implementation of the apparatus, refer to the foregoing descriptions. Details are not described herein again.

For another example, an information processing apparatus is provided, and includes modules (or means) configured to implement steps performed by the fourth network element in any one of the foregoing methods.

The information processing apparatus includes: a communication module, configured to receive a third request, where the third request is used to obtain a computation key, and the third request further includes a privacy computing capability of a second network element.

The communication module is further configured to send a second request, where the second request is used to obtain the computation key, and the request further includes the privacy computing capability of the second network element.

The communication module is further configured to receive seventh information, where the seventh information includes at least one of the computation key and a computation parameter.

The communication module is further configured to send fifth information, where the fifth information includes at least one of the computation key and the computation parameter.

For another optional implementation of the apparatus, refer to the foregoing descriptions. Details are not described herein again.

For descriptions of the foregoing modules, refer to the descriptions of the foregoing embodiments. Details are not described herein again.

It should be understood that division into the modules in the foregoing apparatuses is merely logical function division. During actual implementation, all or some of the modules may be integrated into one physical entity, or may be physically separated. In addition, the modules in the information processing apparatus may be implemented in a form of software invoked by a processor. For example, the information processing apparatus includes the processor, the processor is connected to a memory, the memory stores instructions, and the processor invokes the instructions stored in the memory, to implement any one of the foregoing methods or implement functions of the modules in the apparatus. The processor is, for example, a general-purpose processor, for example, a central processing unit (central processing unit, CPU) or a microprocessor, and the memory is a memory in the apparatus or a memory outside the apparatus. Alternatively, the module in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All the modules in the apparatus may be implemented in a form of software invoked by a processor, or all the modules may be implemented in a form of a hardware circuit, or some modules may be implemented in a form of software invoked by a processor, and a remaining part may be implemented in a form of a hardware circuit.

FIG. 10 is a diagram of a hardware structure of another information processing apparatus according to an embodiment of this application. The information processing apparatus 1000 shown in FIG. 10 includes one or more processors 1001 (where one processor is used as an example in the figure).

The processor 1001 is a circuit having a signal processing capability. In an implementation, the processor 1001 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1001 may implement a specific function by using a logical relationship of a hardware circuit, and the logical relationship of the hardware circuit is fixed or reconfigurable. For example, the processor 1002 is a hardware circuit, for example, an FPGA, implemented by an ASIC or a programmable logic device PLD. In a reconfigurable hardware circuit, a process in which the processor loads a configuration document to implement hardware circuit configuration may be understood as a process in which the processor loads instructions to implement functions of some or all of the foregoing modules. In addition, the processor may alternatively be a hardware circuit designed for artificial intelligence, and can be understood as an ASIC, for example, a neural network processing unit (neural network processing unit, NPU), a tensor processing unit (tensor processing unit, TPU), or a deep learning processing unit (deep learning processing unit, DPU). The processor 1001 is configured to execute a related program, to implement functions that need to be performed by the units in the information processing apparatus in this embodiment of this application, or perform the information processing methods in the method embodiments of this application.

Optionally, the information processing apparatus 1000 may further include a memory (for example, a memory 1003, a memory 1004, or a memory 1005) (represented by dashed lines in the figure). The memory is configured to store instructions executed by the processor 1001, store input data needed by the processor 1001 to run the instructions, or store data generated by running the instructions by the processor 1001.

Optionally, the memory may be located in the one or more processors (for example, the memory 1003), or may be located outside the one or more processors (for example, the memory 1004 or the memory 1005), or may include a storage part located in the one or more processors and a storage part located outside the one or more processors.

In this embodiment of this application, the memory (for example, the memory 1003, the memory 1004, or the memory 1005) may include but is not limited to a cache (cache), a read-only memory (Read-Only Memory, ROM), a random access memory (Random Access Memory, RAM), a synchronous dynamic random access memory (synchronous dynamic random access memory, SDRAM), a hard disk drive (hard disk drive, HDD) or a solid-state disk (solid-state drive, SSD), an erasable programmable read-only memory (Erasable Programmable ROM, EPROM), or a portable read-only memory (Compact Disc Read-Only Memory, CD-ROM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store a computer program or instructions, and/or data.

Optionally, the information processing apparatus 1000 may further include a communication interface 1002 (represented by dashed lines in the figure). The processor 1001 and the communication interface 1002 are coupled to each other. The communication interface 1002 may be a transceiver, an interface circuit, a bus, a module, or a communication interface of another type.

The memory may store a program. When the program stored in the memory is executed by the processor 1001, the processor 1001 and the communication interface 1002 are configured to perform steps in the information processing methods in embodiments of this application.

It can be learned that the modules in the foregoing apparatus may be configured as one or more processors (or processing circuits) for implementing the foregoing methods, for example, a CPU, a GPU, an NPU, a TPU, a DPU, a microprocessor, a DSP, an ASIC, an FPGA, or a combination of at least two of these processor forms, or some processing circuits in these processors.

In addition, all or some of the modules in the foregoing apparatus may be integrated, or may be independently implemented. In an implementation, the modules are integrated and implemented in a form of system-on-a-chip (system-on-a-chip, SoC). The SoC may include at least one processor configured to implement any one of the foregoing methods or implement functions of the modules in the apparatus. Types of the at least one processor may be different, including, for example, a CPU and an FPGA, a CPU and an artificial intelligence processor, and a CPU and a GPU.

It should be noted that although only the memory, the processor, and the communication interface are shown in the apparatus 1000 shown in FIG. 10, in a specific implementation process, a person skilled in the art should understand that the apparatus 1000 further includes other components necessary for implementing a normal operation. In addition, based on a specific requirement, a person skilled in the art should understand that the apparatus 1000 may further include hardware components for implementing other additional functions. In addition, a person skilled in the art should understand that the apparatus 1000 may alternatively include only devices required for implementing embodiments of this application, but does not necessarily include all the devices shown in FIG. 10.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product runs on a computer or a processor, the computer or the processor is caused to perform one or more steps in any one of the foregoing methods.

It should be understood that unless otherwise specified, "/" in the descriptions of this application indicates an "or" relationship between associated objects. For example, A/B may indicate A or B. A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be other division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state drive (solid-state drive, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. An information processing method, applied to a first network element, wherein the method comprises:
encrypting first information, to obtain a first ciphertext of the first information, wherein the first information comprises a first keyword; and
sending second information to a second network element, wherein the second information comprises the first ciphertext of the first information, a type of the first keyword, and a public key identifier.

2. The method according to claim 1, wherein the public key identifier comprises at least one of a network identifier, a network element identifier, a subscriber identifier, a base station identifier, and a sequence number.

3. The method according to claim 1 or 2, wherein at least one of the first network element and the second network element is a network element in a radio network.

4. The method according to claim 3, wherein the first keyword is at least one of a subscriber identifier and a device identifier.

5. The method according to any one of claims 1 to 4, wherein the second information further comprises at least one of the following:
a data category, home network identifier information, routing indicator information, and protection scheme identifier information.

6. The method according to any one of claims 1 to 5, wherein the first information comprises at least one of the following:
user identity information, user subscription information, sensing information, and authentication and/or key information.

7. The method according to any one of claims 1 to 6, wherein the method further comprises:
encrypting the first information based on an encryption key, to obtain the first ciphertext of the first information.

8. The method according to claim 7, wherein the encryption key is determined based on at least one of a home network key, a serving network name, a sequence number, an encryption algorithm identifier, and a common reference quantity; or
the encryption key is determined based on at least one of a user key, a serving network name, a sequence number, a subscriber identifier, an algorithm identifier, and a common reference quantity.

9. The method according to claim 7 or 8, wherein the encrypting the first information based on the encryption key, to obtain the first ciphertext of the first information comprises:
performing initial encryption on the first information based on the encryption key, to obtain an initial ciphertext of the first information; and
performing blinding processing on the initial ciphertext of the first information, to obtain the first ciphertext of the first information.

10. The method according to any one of claims 7 to 9, wherein the method further comprises:
receiving third information from a third network element, wherein the third information comprises the encryption key.

11. The method according to any one of claims 1 to 10, wherein
the first network element is a network element in a home network, and the second network element is a network element in a visited network; or
the first network element is a network element at a high trust level, and the second network element is a network element at a low trust level; or
the first network element is a management plane network element, and the second network element is a control plane network element; or
at least one of the first network element and the second network element is a virtual network element, and a trust zone of the first network element does not comprise the second network element; or
at least one of the first network element and the second network element is a radio access network RAN node, and a trust zone of the first network element does not comprise the second network element; or
the first network element is user equipment UE or an application APP server, and the second network element is a RAN node or a core network element; or
the first network element is a third-party server or a network element in an application layer, and the second network element is a network element in a radio network; or
the first network element is a network element in a radio network, and the second network element is a third-party server or a network element in an application layer.

12. An information processing method, applied to a second network element, wherein the method comprises:
receiving second information from a first network element, wherein the second information comprises a first ciphertext of first information, a type of a first keyword, and a public key identifier, and the first information comprises the first keyword; and
determining, based on a ciphertext of the first keyword, the type of the first keyword, and the public key identifier, information about an association between a second ciphertext and the first ciphertext of the first information.

13. The method according to claim 12, wherein the determining, based on the ciphertext of the first keyword, the type of the first keyword, and the public key identifier, the information about the association between the second ciphertext and the first ciphertext of the first information comprises:
retrieving the second ciphertext from a preset database based on the ciphertext of the first keyword, the type of the first keyword, and the public key identifier, wherein the second ciphertext is a ciphertext corresponding to fourth information in the preset database, and the fourth information comprises the first keyword; and
determining the information about the association between the second ciphertext and the first ciphertext of the first information.

14. The method according to claim 13, wherein the retrieving the second ciphertext from the preset database based on the ciphertext of the first keyword, the type of the first keyword, and the public key identifier comprises:
determining a target key from one or more computation keys based on the public key identifier; and
retrieving the second ciphertext from the preset database based on the ciphertext of the first keyword, the type of the first keyword, and the target key.

15. The method according to claim 14, wherein the method further comprises:
receiving fifth information from a fourth network element, wherein the fifth information comprises the one or more computation keys.

16. The method according to any one of claims 12 to 15, wherein the public key identifier comprises at least one of a network identifier, a network element identifier, a subscriber identifier, a base station identifier, and a sequence number.

17. The method according to any one of claims 12 to 16, wherein at least one of the first network element and the second network element is a network element in a radio network.

18. The method according to claim 17, wherein the first keyword is at least one of a subscriber identifier and a device identifier.

19. The method according to any one of claims 12 to 18, wherein the second information further comprises at least one of the following:
a data category, home network identifier information, routing indicator information, and protection scheme identifier information.

20. The method according to any one of claims 12 to 19, wherein the first information comprises at least one of the following:
user identity information, user subscription information, sensing information, and authentication and/or key information.

21. The method according to any one of claims 12 to 20, wherein
the first network element is a network element in a home network, and the second network element is a network element in a visited network; or
the first network element is a network element at a high trust level, and the second network element is a network element at a low trust level; or
the first network element is a management plane network element, and the second network element is a control plane network element; or
at least one of the first network element and the second network element is a virtual network element, and a trust zone of the first network element does not comprise the second network element; or
at least one of the first network element and the second network element is a radio access network RAN node, and a trust zone of the first network element does not comprise the second network element; or
the first network element is user equipment UE or an application APP server, and the second network element is a RAN node or a core network element; or
the first network element is a third-party server or a network element in an application layer, and the second network element is a network element in a radio network; or
the first network element is a network element in a radio network, and the second network element is a third-party server or a network element in an application layer.

22. An information processing apparatus, comprising:
a processing module, configured to encrypt first information, to obtain a first ciphertext of the first information, wherein the first information comprises a first keyword; and
a communication module, configured to send second information to a second network element, wherein the second information comprises the first ciphertext of the first information, a type of the first keyword, and a public key identifier.

23. The apparatus according to claim 22, wherein the public key identifier comprises at least one of a network identifier, a network element identifier, a subscriber identifier, a base station identifier, and a sequence number.

24. The apparatus according to claim 22 or 23, wherein at least one of the first network element and the second network element is a network element in a radio network.

25. The apparatus according to claim 24, wherein the first keyword is at least one of a subscriber identifier and a device identifier.

26. The apparatus according to any one of claims 22 to 25, wherein the second information further comprises at least one of the following: a data category, home network identifier information, routing indicator information, and protection scheme identifier information.

27. The apparatus according to any one of claims 22 to 26, wherein the first information comprises at least one of the following: user identity information, user subscription information, sensing information, and authentication and/or key information.

28. The apparatus according to any one of claims 22 to 27, wherein the processing module is further configured to:
encrypt the first information based on an encryption key, to obtain the first ciphertext of the first information.

29. The apparatus according to claim 28, wherein the encryption key is determined based on at least one of a home network key, a serving network name, a sequence number, an encryption algorithm identifier, and a common reference quantity; or
the encryption key is determined based on at least one of a user key, a serving network name, a sequence number, a subscriber identifier, an algorithm identifier, and a common reference quantity.

30. The apparatus according to claim 28 or 29, wherein the processing module is further configured to:
perform initial encryption on the first information based on the encryption key, to obtain an initial ciphertext of the first information; and
perform blinding processing on the initial ciphertext of the first information, to obtain the first ciphertext of the first information.

31. The apparatus according to any one of claims 28 to 30, wherein the communication module is further configured to:
receive third information from a third network element, wherein the third information comprises at least one of the encryption key, an encryption parameter, and a decryption key.

32. The apparatus according to any one of claims 22 to 31, wherein
the apparatus is a network element in a home network HPLMN, and the second network element is a network element in a visited network VPLMN; or
the apparatus is a network element at a high trust level, and the second network element is a network element at a low trust level; or
the apparatus is a management plane network element, and the second network element is a control plane network element; or
at least one of the apparatus and the second network element is a virtual network element, and a trust zone of the first information of the apparatus does not comprise the second network element; or
at least one of the apparatus and the second network element is a radio access network RAN node, and a trust zone of the apparatus does not comprise the second network element; or
the apparatus is UE, and the second network element is a RAN node and/or an NF; or
the apparatus is a third-party server or a network element in an application layer, and the second network element is a network element in a radio network; or
the apparatus is a network element in a radio network, and the second network element is a third-party server or a network element in an application layer; or
the apparatus is UE or an application APP server, and the second network element is a RAN node and/or an NF.

33. An information processing apparatus, comprising:
a communication module, configured to receive second information from a first network element, wherein the second information comprises a first ciphertext of first information, a type of a first keyword, and a public key identifier, and the first information comprises the first keyword; and
a processing module, configured to determine, based on a ciphertext of the first keyword, the type of the first keyword, and the public key identifier, information about an association between a second ciphertext and the first ciphertext of the first information.

34. The apparatus according to claim 33, wherein the processing module is configured to:
retrieve the second ciphertext from a preset database based on the ciphertext of the first keyword, the type of the first keyword, and the public key identifier, wherein the second ciphertext is a ciphertext corresponding to fourth information in the preset database, and the fourth information comprises the first keyword; and
determine the information about the association between the second ciphertext and the first ciphertext of the first information.

35. The apparatus according to claim 34, wherein the processing module is further configured to:
determine a target key from one or more computation keys based on the public key identifier; and
retrieve the second ciphertext from the preset database based on the ciphertext of the first keyword, the type of the first keyword, and the target key.

36. The apparatus according to claim 35, wherein the communication module is further configured to:
receive fifth information from a fourth network element, wherein the fifth information comprises at least one of the one or more computation keys and a computation parameter.

37. The apparatus according to any one of claims 33 to 36, wherein the public key identifier comprises at least one of a network identifier, a network element identifier, a subscriber identifier, a base station identifier, and a sequence number.

38. The apparatus according to any one of claims 33 to 37, wherein at least one of the first network element and the second network element is a network element in a radio network.

39. The apparatus according to claim 38, wherein the first keyword is at least one of a subscriber identifier and a device identifier.

40. The apparatus according to any one of claims 33 to 39, wherein the second information further comprises at least one of the following: a data category, home network identifier information, routing indicator information, and protection scheme identifier information.

41. The apparatus according to any one of claims 33 to 40, wherein the first information comprises at least one of the following: user identity information, user subscription information, sensing information, and authentication and/or key information.

42. The apparatus according to any one of claims 33 to 41, wherein the first network element is a network element in a home network HPLMN, and the apparatus is a network element in a visited network VPLMN; or
the first network element is a network element at a high trust level, and the apparatus is a network element at a low trust level; or
the first network element is a management plane network element, and the apparatus is a control plane network element; or
at least one of the first network element and the apparatus is a virtual network element, and a trust zone of the first information of the first network element does not comprise the apparatus; or
at least one of the first network element and the apparatus is a radio access network RAN node, and a trust zone of the first information of the first network element does not comprise the apparatus; or
the first network element is UE, and the apparatus is a RAN node and/or an NF; or
the first network element is a third-party server or a network element in an application layer, and the apparatus is a network element in a radio network; or
the first network element is a network element in a radio network, and the apparatus is a third-party server or a network element in an application layer; or
the first network element is UE or an application APP server, and the apparatus is a RAN node and/or an NF.

43. An information processing apparatus, wherein the apparatus comprises a processor, and the processor is configured to cause, by executing a computer program (or computer-executable instructions) stored in a memory and/or by using a logic circuit, the apparatus to perform the method according to any one of claims 1 to 11.

44. An information processing apparatus, wherein the apparatus comprises a processor, and the processor is configured to cause, by executing a computer program (or computer-executable instructions) stored in a memory and/or by using a logic circuit, the apparatus to perform the method according to any one of claims 12 to 21.

45. The apparatus according to claim 43 or 44, further comprising the memory.

46. An information processing system, wherein the system comprises the information processing apparatus according to claim 43 and the information processing apparatus according to claim 44.

47. A computer-readable storage medium, storing a computer program, wherein when the computer program is executed by a processor, the method according to any one of claims 1 to 11 is implemented, or the method according to any one of claims 12 to 21 is implemented.

48. A computer program product comprising instructions, wherein when the computer program product runs on a processor, the method according to any one of claims 1 to 11 is implemented, or the method according to any one of claims 12 to 21 is implemented.
